(19) Europäisches Patentamt
European Patent Office
Office européen des brevets

(11) EP 4 542 946 A1

(12) **EUROPEAN PATENT APPLICATION**
published in accordance with Art. 153(4) EPC

(43) Date of publication:
**23.04.2025 Bulletin 2025/17**

(21) Application number: **23839685.7**

(22) Date of filing: **13.07.2023**

(51) International Patent Classification (IPC):
***H04L 27/26*** *(2006.01)* ***H04B 7/155*** *(2006.01)*

(52) Cooperative Patent Classification (CPC):
**H04B 7/155; H04L 27/26**

(86) International application number:
**PCT/JP2023/025923**

(87) International publication number:
**WO 2024/014513 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.07.2022 JP 2022113925**

(71) Applicant: **Softbank Corp.**
**Tokyo 105-7529 (JP)**

(72) Inventors:
- **FUJII Takafumi**
**Tokyo 105-7529 (JP)**
- **FUJII Teruya**
**Tokyo 105-7529 (JP)**

(74) Representative: **SSM Sandmair Patentanwälte Rechtsanwalt Partnerschaft mbB**
**Joseph-Wild-Straße 20**
**81829 München (DE)**

# (54) INTERFERENCE SUPPRESSION DEVICE, SATELLITE GROUND STATION, SYSTEM, METHOD AND PROGRAM

(57) Provided is a satellite ground station that comprises an interference suppression apparatus capable of suppressing interference from a base station of a mobile communication system in a downlink of a satellite communication system. The interference suppression apparatus receives, via a wired network, a reference signal branched from a transmission signal transmitted from an antenna of the base station of the mobile communication system, estimates a propagation path response of an interference signal from the base station in a radio propagation path between the antenna of the base station and an antenna of the satellite ground station, based on the reference signal and a reception signal received via the antenna of the satellite ground station, and generates an interference replica signal corresponding to the interference signal included in the reception signal, based on the estimation result and the reference signal. A satellite-ground station apparatus branches the reception signal and inputs it to the interference suppression apparatus, and synthesizes a satellite signal in which the interference signal is suppressed by applying the interference replica signal generated by the interference suppression apparatus, to the reception signal.

10
11
S0
31
30
20
22
21
40
S10
X
S0
S10
23
BRANCH-ING
24
SYNTHE-SIZING
S0
X
Y
32
gNB
S1
BRANCH-ING
33
S1
TRANSMISSION SIGNAL
S1
REFERENCE SIGNAL
INTERFERENCE SUPPRESSION APPARATUS
S1
25
WIRED NETWORK
50

FIG. 3

EP 4 542 946 A1

## Description

TECHNICAL FIELD

The present invention relates to an interference suppression apparatus, a satellite ground station, a system, a method and a program for suppressing interference from a base station of a mobile communication in a downlink of a satellite communication system.

BACKGROUND ART

There is conventionally known a satellite communication system capable of wirelessly communicating between a satellite station mounted on an artificial satellite and a satellite ground station (also referred to as an "earth station") installed on the ground (or on the sea) (for example, see Patent Literature 1).

CITATION LIST

PATENT LITERATURE

Patent Literature 1: Japanese Unexamined Patent application publication No. 2005-237040.

SUMMARY OF INVENTION

TECHNICAL PROBLEM

In recent years, it has been considered to use the same frequency band as a downlink radio communication received by a satellite ground station of a satellite communication system, in a radio communication transmitted from a base station to a terminal apparatus in a mobile communication system. In the case of using the same frequency band for the base station and the downlink of the satellite ground station in this way, the radio waves of the transmission signal from the base station of the mobile communication system may interfere with the reception signal of the downlink of the satellite ground station.

SOLUTION TO PROBLEM

An interference suppression apparatus according to an aspect of the present invention is an interference suppression apparatus for suppressing interference in a reception signal of a satellite ground station that receives a downlink satellite signal transmitted from a satellite station mounted on an artificial satellite. This interference suppression apparatus comprises reference-signal receiving means for receiving, via a wired network, a reference signal branched from a transmission signal transmitted from an antenna of a base station of a mobile communication system in which the base station performs a radio communication with a terminal apparatus using the same frequency band as downlink radio waves from the satellite station, estimating means for estimating a propagation path response and a propagation delay amount of an interference signal from the base station in a radio propagation path between the antenna of the base station and an antenna of the satellite ground station, based on the reference signal received from the base station via the wired network and a reception signal received via the antenna of the satellite ground station, and signal generating means for generating an interference replica signal corresponding to an interference signal included in the reception signal, based on estimation results of the propagation path response and propagation delay amount of the interference signal, and the reference signal.

A satellite ground station according to another aspect of the present invention is a satellite ground station comprising an antenna for receiving downlink radio waves transmitted from a satellite station, and a satellite-ground station apparatus for processing a reception signal received by the antenna. The satellite-ground station apparatus comprises the foregoing interference suppression apparatus, branching means for branching the reception signal received by the antenna and inputting the branched reception signal to the interference suppression apparatus, and synthesizing means for synthesizing the satellite signal in which the interference signal is suppressed by applying the interference replica signal generated by the interference suppression apparatus to the reception signal.

In the foregoing satellite ground station, the branching means may branch the reception signal at a front position located closer to the antenna than a synthesizing point of the satellite signal on a main path of the reception signal, and input the branched reception signal to the interference suppression apparatus.

In the foregoing satellite ground station, the branching means may branch the reception signal at a rear position located on an opposite side farther from the antenna than a synthesizing point of the satellite signal on a main path of the reception signal, and input the branched reception signal to the interference suppression apparatus.

In the foregoing satellite ground station, the satellite ground station may comprise monitoring means for monitoring the signal that is branched by the branching means and inputted to the interference suppression apparatus, and controlling an on/off of applying the interference replica signal to the reception signal based on a monitoring result of the signal may be provided.

In the foregoing satellite ground station, the estimating means may estimate plural sets of propagation path responses and propagation delay amounts of plural interference signals in plural radio propagation paths between the antenna of the base station and the antenna of the satellite ground station, the signal generating means may generate plural interference replica signals corresponding to plural interference signals included in the reception signal, based on estimation results of the propagation path responses and the propagation delay amounts of the plural interference signals, and the reference signal, and the synthesizing means may synthesize the satellite signal in which the plural interference signals are suppressed by collectively applying the plural interference replica signals generated by the interference suppression apparatus to the reception signal.

Herein, the satellite ground station may perform the generation of the interference replica signal by the signal generating means, and the application of the interference replica signal and the synthesis of the satellite signal by the synthesizing means, with respect to one or more interference signals in which a power calculated based on the propagation path response of the interference signal by the estimating means is greater than a predetermined threshold value, among the plural interference signals.

In the foregoing satellite ground station, the satellite ground station may comprise plural sets of the estimating means, the signal generating means and the synthesizing means, in correspondence with plural interference signals in plural radio propagation paths between the antenna of the base station and the antenna of the satellite ground station, the plural estimating means may estimate plural sets of propagation path responses and propagation delay amounts of the plural interference signals in the plural radio propagation paths between the antenna of the base station and the antenna of the satellite ground station, the plural signal generating means may generate plural interference replica signals corresponding to the plural interference signals included in the reception signal, based on estimation results of the propagation path responses and the propagation delay amounts of the plural interference signals, and the reference signal, and the satellite ground station may sequentially perform the estimation of the propagation path response and the propagation delay amount of the interference signal by the estimating means, the generation of the interference replica signal by the signal generating means, and the application of the interference replica signal and the synthesis of the satellite signal by the synthesizing means, with respect to the plural interference signals.

Herein, each of the foregoing plural signal generating means may perform the generation of the interference replica signal by the signal generating means, and the application of the interference replica signal and the synthesis of the satellite signal by the synthesizing means, with respect to an interference signal in which a maximum power calculated based on the propagation path response of the interference signal by the estimating means, among the plural interference signals.

In the foregoing satellite ground station, the reference-signal receiving means may receive plural reference signals branched from transmission signals transmitted from antennas of plural base stations of the mobile communication system, via a wired network, the estimating means may estimate plural sets of propagation path responses and propagation delay amounts of plural interference signals in plural radio propagation paths between the antennas of the plural base stations and the antenna of the satellite ground station, based on the plural reference signals received from the plural base stations via the wired network and the reception signal received via the antenna of the satellite ground station, the signal generating means may generate plural interference replica signals corresponding to the plural interference signals included in the reception signal, based on estimation results of the plural sets of the propagation path responses and the propagation delay amounts of the plural interference signals, and the plural reference signals, and the synthesizing means may synthesize the satellite signal in which the plural interference signals are suppressed by collectively applying the plural interference replica signals generated by the interference suppression apparatus to the reception signal.

In the foregoing satellite ground station, the reference-signal receiving means may receive plural reference signals branched from transmission signals transmitted from antennas of plural base stations of the mobile communication system, via the wired network, the satellite ground station may comprise plural sets of the estimating means, the signal generating means and the synthesizing means in correspondence with the plural base stations, and the satellite ground station may sequentially perform the estimation of the propagation path response and the propagation delay amount of the interference signal by the estimating means, the generation of the interference replica signal by the signal generating means, and the application of the interference replica signal and the synthesis of the satellite signal by the synthesizing means, with respect to the plural base stations.

In the foregoing satellite ground station the satellite ground station may perform the generation of the interference replica signal by the signal generating means, and the application of the interference replica signal and the synthesis of the satellite signal by the synthesizing means, in the order of the base station with the higher total power of the plural interference signals calculated based on the propagation path response of the interference signal by the estimating means, with respect to the plural base stations.

In the foregoing satellite ground station available for the plural base stations, the estimating means may estimate, for each of the plural base stations, the plural sets of the propagation path responses and the propagation delay amounts of the plural interference signals in the plural radio propagation paths between the antenna of the base station and the antenna of the satellite ground station, the signal generating means may generate, for each of the plural base stations, the plural interference replica signals corresponding to the plural interference signals included in the reception signal, based on the estimation results of the plural sets of the propagation path responses and the propagation delay amounts of the plural interference signals, and the reference signal, and the synthesizing means may synthesize the satellite signal in which the plural interference signals are suppressed by collectively applying the plural interference replica signals generated by the interference suppression apparatus so as to be respectively corresponding to the plural base stations, to the reception signal.

In the foregoing satellite ground station available for the plural base stations, for each of the plural base stations, plural sets of the estimating means, the satellite ground station may comprise the signal generating means and the synthesizing means in correspondence with plural interference signals in plural radio propagation paths between the antenna of the base station and the antenna of the satellite ground station, the plural estimating means in each of the plural base stations may estimate the plural sets of propagation path responses and propagation delay amounts of the plural interference signals in the plural radio propagation paths between the antenna of the base station and the antenna of the satellite ground station, the plural signal generating means in each of the plural base stations may generate plural interference replica signals corresponding to plural interference signals included in the reception signal, based on estimation results of the propagation path responses and the propagation delay amounts of the plural interference signals, and the reference signal, and, the satellite ground station may sequentially perform the estimation of the propagation path response and the propagation delay amount of the interference signal by the estimating means, the generation of the interference replica signal by the signal generating means, the application of the interference replica signal and the synthesis of the satellite signal by the synthesizing means, with respect to the plural interference signals in each of the plural base stations.

In the foregoing satellite ground station, a delay device for delaying the reception signal may be provided between the antenna and a branching point of the reception signal or between the branching point of the reception signal and a synthesizing point of the satellite signal.

A system according to yet another aspect of the present invention is a system comprising any one of the foregoing satellite ground stations and one or more base stations of the mobile communication system. Herein, a delay device for delaying the transmission signal may be provided between a base station apparatus of the base station and the antenna.

A method according to yet another aspect of the present invention is an interference suppression method for suppressing interference in a reception signal of a satellite ground station that receives a downlink satellite signal transmitted from a satellite station mounted on an artificial satellite. This interference suppression method comprises receiving, via a wired network, a reference signal branched from a transmission signal transmitted from an antenna of a base station of a mobile communication system, in which the base station performs a radio communication with a terminal apparatus using a same frequency band as downlink radio waves from the satellite station, estimating a propagation path response and a propagation delay amount of an interference signal from the base station in a radio propagation path between the antenna of the base station and an antenna of the satellite ground station, based on the reference signal received from the base station via the wired network and a reception signal received via the antenna of the satellite ground station, generating an interference replica signal corresponding to the interference signal included in the reception signal, based on estimation results of the propagation path response and propagation delay amount of the interference signal, and the reference signal, and synthesizing the satellite signal in which the interference signal is suppressed by applying the interference replica signal to the reception signal.

A program according to yet another aspect of the present invention is a program executed by a computer or processor provided in an interference suppression apparatus for suppressing interference in a reception signal of a satellite ground station that receives a downlink satellite signal transmitted from a satellite station mounted on an artificial satellite. This program comprises a program code for receiving, via a wired network, a reference signal branched from a transmission signal transmitted from an antenna of a base station of a mobile communication system, in which the base station performs radio communication with a terminal apparatus using a same frequency band as downlink radio waves from the satellite station, a program code for estimating a propagation path response of an interference signal from the base station in a radio propagation path between an antenna of the base station and an antenna of the satellite ground station, based on the reference signal received from the base station via the wired network and a reception signal received via the antenna of the satellite ground station, and a program code for generating an interference replica signal corresponding to the interference signal included in the reception signal, based on an estimation result of the propagation path response of the interference signal, and the reference signal.

All or part of the foregoing program for estimating (calculating) the propagation path response and generating the interference suppression signal may include a learned model used for machine learning.

ADVANTAGEOUS EFFECTS OF INVENTION

According to the present invention, it is possible to suppress interference from a base station of a mobile communication system in a downlink of a satellite communication system.

BRIEF DESCRIPTION OF DRAWINGS

[FIG. 1] FIG. 1 is an illustration showing an example of a satellite communication system to which an interference suppression apparatus according to an embodiment can be applied.
[FIG. 2A] FIG. 2A is an illustration of interference reduction by beamforming of a base station antenna according to a reference example.
[FIG. 2B] FIG. 2B is an illustration of interference reduction by beamforming of a base station antenna according to the reference example.
[FIG. 3] FIG. 3 is an illustration showing an example of an overall configuration of an interference suppression system including a network cooperation between a base station and a satellite ground station mounted on the interference suppression apparatus according to the embodiment.
[FIG. 4] FIG. 4 is an illustration showing an example of an outline of an interference suppression processing according to the embodiment.
[FIG. 5] FIG. 5 is an illustration of time lag in transmission of an interference signal and a reference signal from the base station to the satellite ground station in the system according to the embodiment.
[FIG. 6] FIG. 6 is an illustration showing an example of timing adjustment of the interference signal at the satellite ground station in the system according to the embodiment.
[FIG. 7] FIG. 7 is an illustration showing an example of timing adjustment of a transmission signal (interference signal) at the base station in the system according to the embodiment.
[FIG. 8] FIG. 8 is an illustration showing an example of a configuration and process procedures of the interference suppression apparatus according to the embodiment.
[FIG. 9] FIG. 9 is an illustration showing a principle of interference cancellation of multipath interference signals in the case of a single base station.
[FIG. 10] FIG. 10 is an illustration showing a comparison between amplitudes of the multipath interference signals and a threshold value.
[FIG. 11] FIG. 11 is an illustration showing a process example of an interference-cancellation signal generating section of the interference suppression apparatus according to the embodiment.
[FIG. 12] FIG. 12 is an illustration showing a configuration example of a ground station apparatus provided with a front-branching type interference suppression apparatus according to the embodiment.
[FIG. 13] FIG. 13 is an illustration showing a configuration example of a ground station apparatus provided with a rear-branching type interference suppression apparatus according to the embodiment.
[FIG. 14] FIG. 14 is an illustration showing an example of a relationship between a satellite signal (desired signal) and an interference signal on a frequency axis.
[FIG. 15A] FIG. 15A is an illustration showing an example of control in the ground station apparatus of the rear-branching method of FIG. 13.
[FIG. 15B] FIG. 15B is an illustration showing an example of control in the ground station apparatus of the rear-branching method of FIG. 13.
[FIG. 16] FIG. 16 is an illustration showing a configuration example of a ground station apparatus provided with an interference suppression apparatus of a multipath-batch detection method.
[FIG. 17] FIG. 17 is an illustration showing a configuration example of a ground station apparatus provided with an interference suppression apparatus of a multipath-sequential detection method.
[FIG. 18A] FIG. 18A is an illustration showing an example of a configuration for the k-th interference signal in the interference suppression apparatus of the multipath-sequential detection method of FIG. 17.
[FIG. 18B] FIG. 18B is an illustration showing an example of amplitudes of all interference signals in a reception signal inputted to the k-th interference-estimation processing section of the multipath-sequential detection method of FIG. 17 and a threshold value.
[FIG. 19] FIG. 19 is an illustration showing an example of an overall configuration of an interference suppression system including a network cooperation between the satellite ground station mounted on the interference suppression apparatus and plural base stations according to the embodiment.

[FIG. 20] FIG. 20 is an illustration showing a configuration example of a ground station apparatus provided with an interference suppression apparatus of a parallel-signal processing method available for plural base stations.

[FIG. 21] FIG. 21 is an illustration showing a configuration example of a ground station apparatus provided with an interference suppression apparatus of a serial-signal processing method available for plural base stations.

[FIG. 22A] FIG. 22A is an illustration showing an example of amplitudes of all interference signals in reception signals (intermediate restored signals) inputted to the interference-estimation processing section in the first interference suppression apparatus of FIG. 21 and a threshold value.

[FIG. 22B] FIG. 22B is an illustration showing an example of amplitudes of all interference signals in reception signals (intermediate restored signals) inputted to the interference-estimation processing section in the n-th interference suppression apparatus of FIG. 21 and a threshold value.

[FIG. 22C] FIG. 22C is an illustration showing an example of amplitudes of all interference signals in reception signals (intermediate restored signals) inputted to the interference-estimation processing section in the N-th interference suppression apparatus of FIG. 21 and a threshold value.

DESCRIPTION OF EMBODIMENTS

Hereinafter, embodiments of the present invention are described with reference to the drawings.

The system according to the embodiment described herein is a system capable of suppressing (hereinafter also referred to as "cancelling") interference (especially multipath interference) from a base station in a downlink reception signal of a satellite ground station when using the same frequency band (for example, C band within 1 GHz to 6 GHz) as a downlink radio communication received by a satellite ground station of a satellite communication system, in a radio communication transmitted from a base station to a terminal apparatus in a mobile communication system such as the 5th generation, etc.

Is is noted that in the following embodiments, although a case is explained in which an interference signal to a downlink reception signal of a satellite ground station of a satellite communication system is a transmission signal transmitted from a base station (for example, gNodeB) of the 5th generation mobile communication system (hereinafter referred to as "5G system"), embodiments of the present invention can be applied to suppress an interference signal from a base station of a mobile communication system such as an LTE (Long Term Evolution)/LTE-Advanced mobile communication system and the next-generation mobile communication system after the 5th generation (also referred to as "NR systems"), etc., as long as they use a frequency band that is the same as or partially overlaps with the downlink of the satellite communication system.

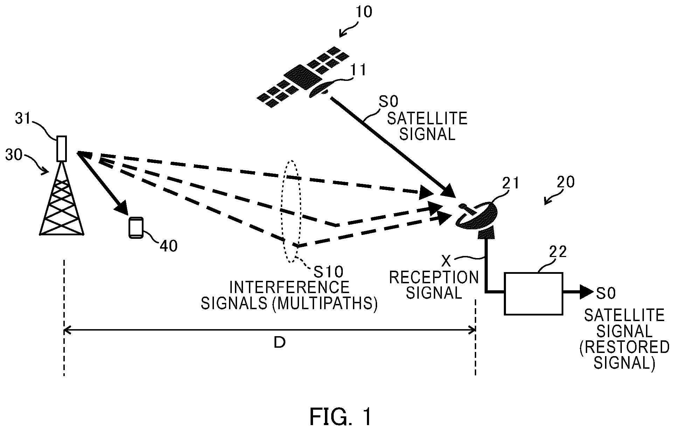

FIG. 1 is an illustration showing an example of a satellite communication system to which an interference suppression apparatus according to an embodiment can be applied. In FIG. 1, the satellite communication system is provided with a satellite ground station (also referred to as an "earth station") 20 for receiving a satellite signal S0 in a predetermined frequency band (for example, C band within 1 GHz to 6 GHz) which is transmitted from an antenna of satellite station (also referred to as a "satellite station antenna") 11 mounted on an artificial satellite 10. The satellite ground station 20, which is provided on the ground (or on the sea, etc.) of the earth, is provided with a ground station antenna 21 for receiving radio waves of the satellite signal S0 in the predetermined frequency band transmitted from the satellite station antenna 11, and a satellite-ground station apparatus (hereinafter also referred to as "ground station apparatus") 22 for processing a reception signal X received by the ground station antenna 21 to restore and output the satellite signal S0.

On the other hand, a base station 30 of a mobile communication system (for example, the 5G system), which is disposed on the ground, is capable of wirelessly communicating with a terminal apparatus (also referred to as a "terminal", "user equipment (UE)", or "mobile station") 40 via a base station antenna 31. A frequency band assigned to the base station 30 is the same frequency band as the downlink of the satellite communication system (for example, C band within 1 GHz to 6 GHz). There is a risk that the radio waves of the transmission signal transmitted from the base station antenna 31 of the base station 30 may reach the ground station antenna 21 of the satellite ground station 20 through multiple propagation paths and may be received as multipath interference signals S10. In order to avoid the interference signal S10 in the same frequency band from the base station 30 in the downlink of this satellite communication system, the distance between the base station antenna 31 of the base station 30 and the ground station antenna 21 of the satellite ground station 20 must be greater than or equal to a certain separation distance (for example, about 100 km). Therefore, the base station 30 of the mobile communication system (for example, the 5G system) cannot be constructed within a certain distance D (for example, about 100 km) from the ground station antenna 21 of the satellite ground station 20.

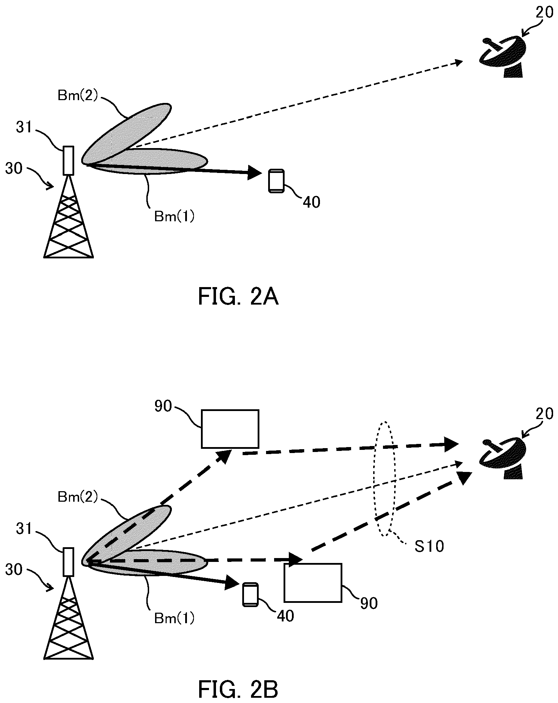

As methods for reducing the interference from the base station 30, for example, there are a method for reducing a transmission power of the base station 30 and a method for reducing interference by beamforming of the base station antenna. In the former method, the transmission power of the base station 30 can be reduced, and the interference to the satellite ground station 20 can be reduced. However, many base stations 30 need to be disposed to cover the service area. Further, in the latter method, for example, as shown in FIG. 2A, in order to prevent radio waves from reaching the satellite ground station 20 from the base station antenna 31, the interference to the satellite ground station 20 is reduced by processing such as a beam forming (beam null forming) that directs the nulls of beams Bm(1) and Bm(2) in the direction of the satellite ground station 20. However, as shown in FIG. 2B, in a case where there are multiple propagation paths (multipaths) through which the radio waves of beams Bm(1) and Bm(2) spatially propagate by a building 90 or the like located between the base station 30 and the satellite ground station 20, there is a risk that the interference caused by the multipath interference signals S10 to the satellite ground station 20 cannot be reduced.

Therefore, in the present embodiment, by providing an interference suppression apparatus 25 in the satellite ground station 20, the interference to the downlink of the satellite ground station 20 due to multipath interference signals from the base station 30 is reduced without increasing the number of the base stations 30 installed.

[Basic Concept of Interference Suppression System]

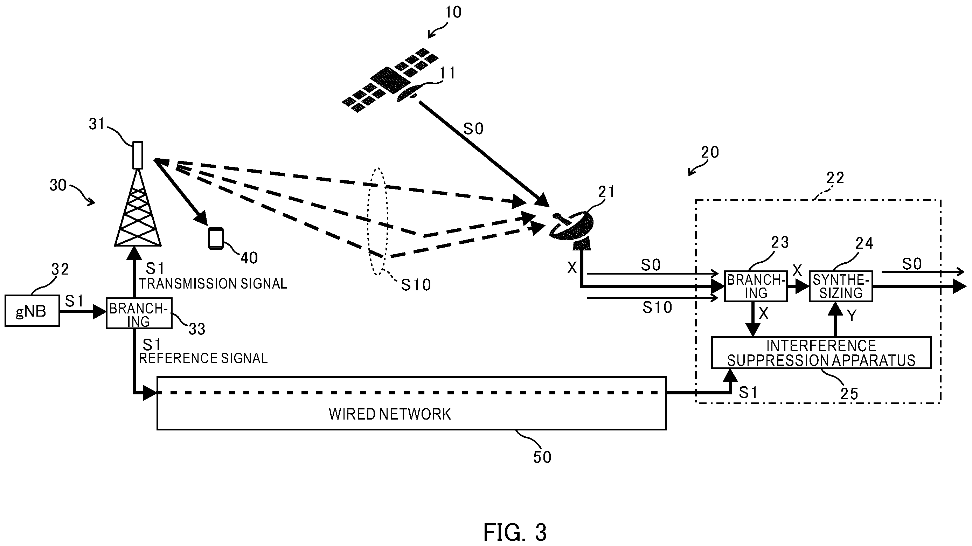

FIG. 3 is an illustration showing an example of an overall configuration of an interference suppression system including a network cooperation between the satellite ground station 20 mounted on the interference suppression apparatus 25 and the base station 30 according to the embodiment. In FIG. 3, a transmission signal S1 outputted from a gNodeB (gNB) 32 as a base station apparatus of the base station 30 is branched and transferred to the ground station apparatus 22 of the satellite ground station 20 via a wired network 50 as a reference signal S1 for suppressing (cancelling) the interference from the base station 30. The wired network 50 is constructed of, for example, an optical fiber.

The ground station apparatus 22 is provided with a branching section (branching means) 23, a synthesizing section (synthesizing means) 24, and the interference suppression apparatus 25. The branching section 23 branches the reception signal X received by the ground station antenna 21 and inputs the branched signal to the interference suppression apparatus 25.

The interference suppression apparatus 25 has a function as reference-signal receiving means for receiving, via the wired network 50, the signal S1 branched from the transmission signal transmitted from the antenna 31 of the base station 30 of the mobile communication system that performs a radio communication with the terminal apparatus 40 using the same frequency band as the downlink radio waves from the satellite station of the artificial satellite 10. The interference suppression apparatus 25 also functions as estimating means for estimating a propagation path response (or, a propagation path response and a propagation delay amount) of the interference signal S10 from the base station 30 in the radio propagation path between the antenna 31 of the base station 30 and the ground station antenna 21 of the satellite ground station 20, based on the reference signal S1 received from the base station 30 via the wired network 50 and the reception signal X received via the ground station antenna 21 of the satellite ground station 20. Furthermore, the interference suppression apparatus 25 also functions as signal generating means for generating one or more interference replica signals Y corresponding to one or more interference signals S10 included in the reception signal X, based on an estimation result of the propagation path response (or, the propagation path response and the propagation delay amount) of the interference signals S10 and the reference signal S1.

The interference suppression apparatus 25 calculates the propagation path response and the propagation delay amount of the radio waves of the interference signal arriving from the base station 30, for example, based on the reference signal S1 via the wired network 50 and the reception signal X of the radio waves arriving from the base station 30, and generates the interference replica signal Y that reproduces the interference signal received from the base station 30 by superimposing the calculated propagation path response and propagation delay amount on the reference signal S1 obtained via the wired network 50.

In case that the reception signal X contains plural interference signals (for example, multipath interference signals), the interference suppression apparatus 25 calculates, for each of the plural interference signals, the propagation path response and the propagation delay amount (hereinafter also referred to as "delay amount", "delay time difference", or "relative delay") of the interference signal arriving from the base station 30 based on the reference signal S1 and the reception signal X, and generates plural interference replica signals Y that reproduce the interference signals received from the base station 30 by delaying the reference signal S1 by the propagation delay amount and superimposing it on the propagation path response.

Herein, the foregoing delay amount (delay time difference, relative delay) is a relative time difference from the reference timing of the reception signal X on the time axis to the reception timing of the plural interference signals, or a numerical value corresponding to the time difference.

The synthesizing section 24 synthesizes the satellite signal (restored signal) S0 in which one or more interference signals are suppressed by applying an interference suppression signal (hereinafter also referred to as "interference cancellation signal") consisting of one or more interference replica signals Y generated by the interference suppression apparatus 25, to the reception signal X. The synthesizing section 24 suppresses (cancels) the interference, for example, by subtracting one or more reproduced interference replica signals Y from the reception signal X received by the satellite ground station 20, and outputs the restored signal S0 obtained by restoring the satellite signal that is a desired signal.

[Overview of Interference Suppression Processing]

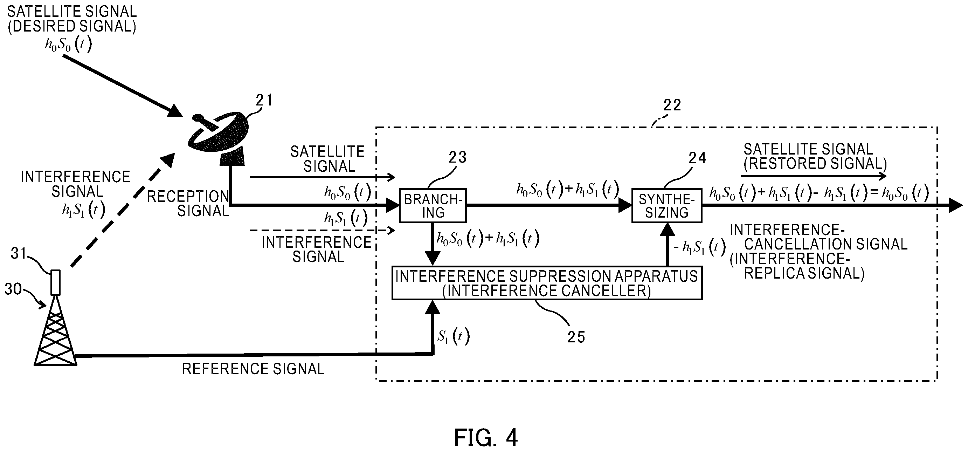

FIG. 4 is an illustration showing an example of an outline of interference suppression processing according to the embodiment. In FIG. 4, the satellite signal (desired signal) $S_0(t)$ transmitted from the satellite station antenna 11 propagates in the space between the antennas (propagation path response: $h_0$), and is received by the ground station antenna 21 as a satellite signal $h_0S_0(t)$ after propagation. The transmission signal $S_1(t)$ transmitted from the base station antenna 31 propagates in the space between the antennas (propagation path response: $h_1$), and is received by the ground station antenna 21 as an interference signal $h_1S_1(t)$ after propagation. The reception signal ($h_0S_0(t)+h_1S_1(t)$) including the satellite signal $h_0S_0(t)$ and the interference signal $h_1S_1(t)$ outputted from the ground station antenna 21 is branched at the branching section 23 and inputted to the interference suppression apparatus 25. The reference signal $S_1(t)$ transferred from the base station 30 via the wired network 50 is received and inputted to the interference suppression apparatus 25. The interference suppression apparatus 25 creates (generates) an interference replica signal ($-h_1S_1(t)$) with an opposite phase based on the reception signal ($h_0S_0(t)+h_1S_1(t)$) and the reference signal $S_1(t)$, and outputs it to the synthesizing section 24 as the interference cancellation signal. The synthesizing section 24 adds the opposite-phase interference cancellation signal ($-h_1S_1(t)$) to the reception signal ($h_0S_0(t)+h_1S_1(t)$), restores and generates the satellite signal ($h_0S_0(t)$) as shown in the following equation (1).

$$h_0S_0(t)+h_1S_1(t)-h_1S_1(t)=h_0S_0(t) \quad \cdots (1)$$

[Transmission Delay Measures of Reference Signal]

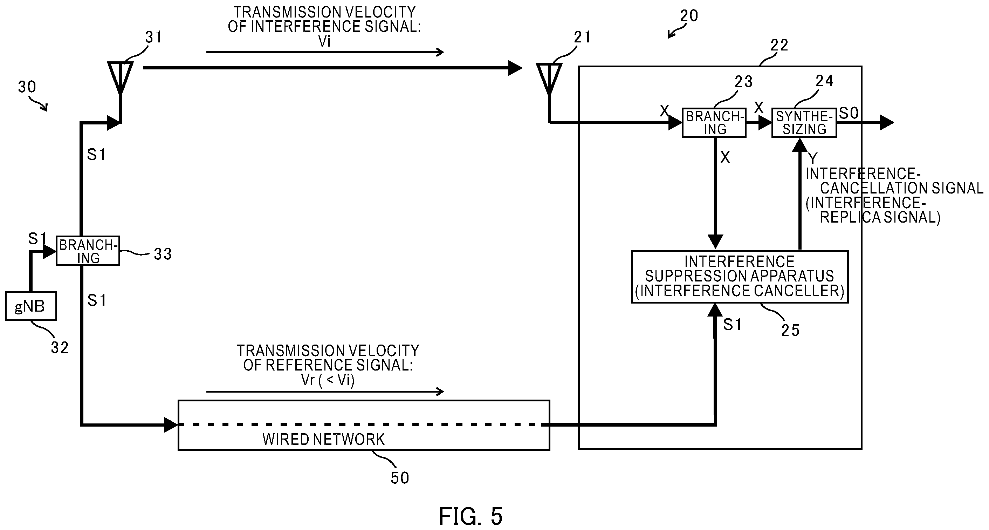

FIG. 5 is an illustration of the time lag in transmission of the interference signal and reference signal from the base station 30 to the satellite ground station 20 in the system according to the embodiment. The transmission velocity Vr (for example, 100 μsec/10 km) of the reference signal S1 in the wired network (optical fiber, etc.) 50 is about 2/3 of the transmission velocity Vi (for example, several 10 μsec/10 km) of the interference signal S10 in the radio propagation path. As a result, if the interference signal S10 corresponding to the same transmission signal is received earlier than the reference signal S1 at the satellite ground station 20, and the separation distance between the satellite ground station 20 and the base station 30 is long, there is a risk that the interference cancellation signal (interference replica signal) cannot be generated in time and the interference signal cannot be suppressed. Therefore, in the present embodiment, the time adjustment between the interference replica signal Y generated by the reference signal S1 and the interference signal S10 may be performed by delaying the interference signal S10.

[Reception Timing Adjustment at Satellite Ground Station]

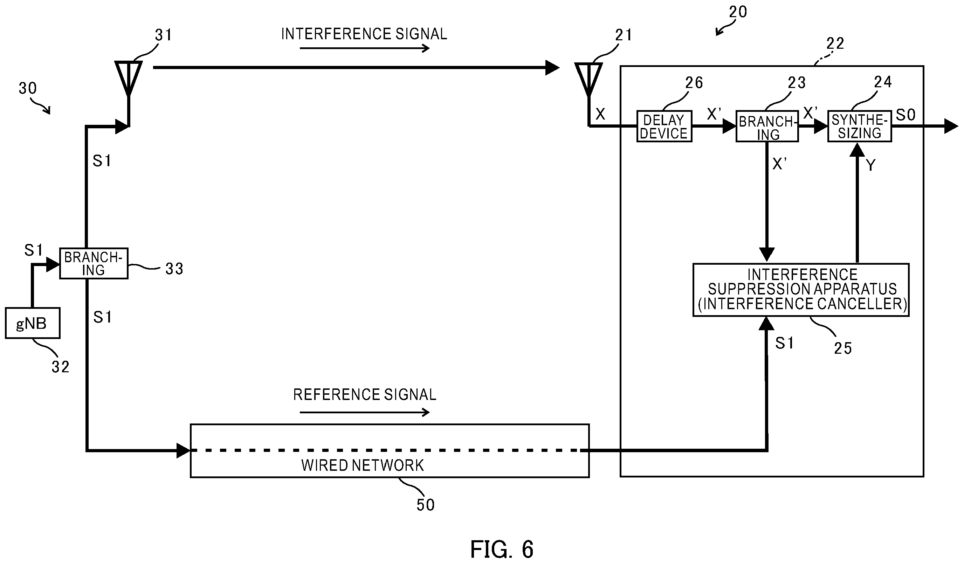

FIG. 6 is an illustration showing an example of timing adjustment of interference signals at the satellite ground station 20 in the system according to the embodiment. In the example of FIG. 6, a delay device 26 for delaying the reception signal X is provided between the ground station antenna 21 and the branching point (branching section 23) of the reception signal. By applying a delay to a radio receiving circuit of the satellite ground station 20 by the delay device 26, and branching the reception signal X' after delaying and inputting it to the interference suppression apparatus 25, it is possible to adjust the timing between the interference signal S10 in the reception signal X' and the reference signal S1. In the example of FIG. 6, since the signal delay processing is performed in the satellite ground station 20, it is possible to suppress the processing burden due to delay processing in the base station 30.

[Transmission Timing Adjustment at Base Station]

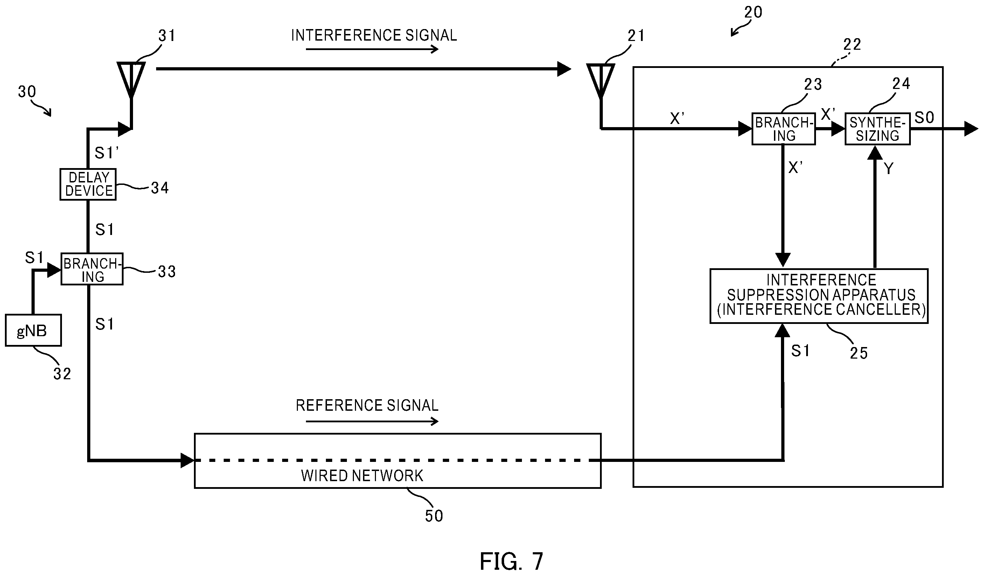

FIG. 7 is an illustration showing an example of timing adjustment of the transmission signal (interference signal) at the base station 30 in the system according to the embodiment. In the example of FIG. 7, a delay device 34 for delaying the transmission signal S1 is provided between the base station apparatus (gNB) 32 of the base station 30 and the base station antenna 31 (in the illustrated example, between the branching point (branching section 33) of the transmission signal and the base station antenna 31). By applying a delay to the radio transmission circuit of the base station 30 by the delay device 34 and transmitting the transmission signal S1' after delaying, it is possible to adjust the timing between the interference signal S10 in the reception signal X' at the satellite ground station 20 and the reference signal S1. In the example of FIG. 7, since the signal delay processing is performed in the base station 30, it is possible to suppress the processing burden due to delay processing in the satellite ground station 20.

[Linear Interference Canceller]

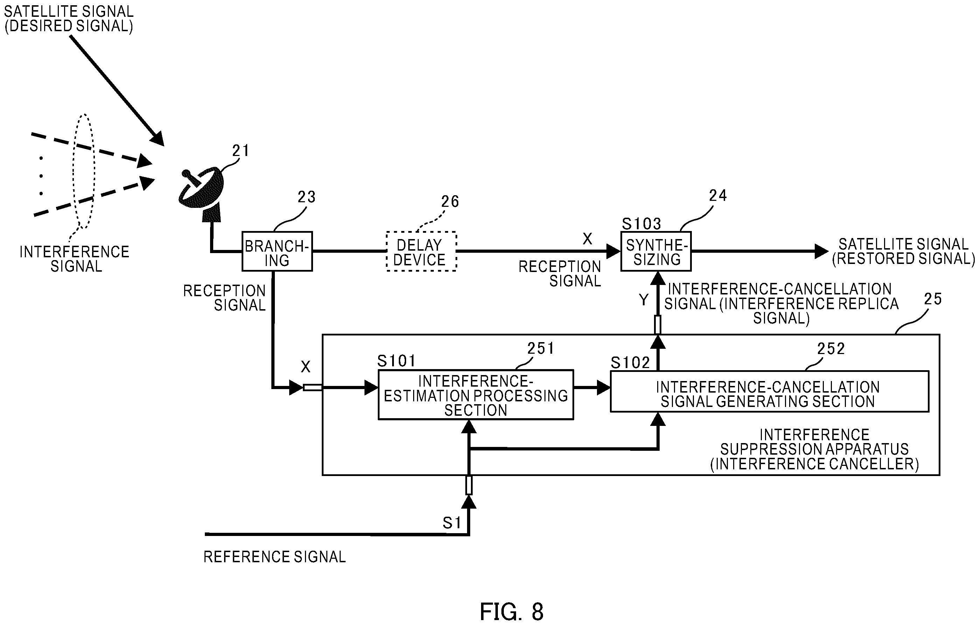

FIG. 8 is an illustration showing an example of the configuration and processing procedures of the interference suppression apparatus 25 according to the embodiment. The example in FIG. 8 is an example of the interference suppression apparatus 25 that functions as a linear interference canceller. It is noted that in the example of FIG. 8, although the delay device 26 is provided between the branching section 23 and the synthesizing section 24, the delay device 26 is not essential. The interference suppression apparatus 25 receives and obtains the transmission signal S1 transmitted from each base station 30 through the wired network (fixed network) from the surrounding base stations 30 as a reference signal, at the satellite ground station 20. The interference suppression apparatus 25 estimates plural replicas of interference signals from plural base stations received by the satellite ground station 20, based on the obtained reference signal S1, and creates (generates) interference replica signals as interference cancellation signals. The interference suppression apparatus 25 suppresses (cancels) the interference signals from the base stations 30 by adding the interference cancellation signals (interference replica signals) to the received reception signal in reverse phase.

In FIG. 8, the interference suppression apparatus 25 is provided with an interference-estimation processing section 251 and an interference-cancellation signal generating section 252. The interference-estimation processing section 251 functions as estimating means for estimating the propagation path response (or, the propagation path response and the propagation delay amount) of the interference signal from the base station 30 in the radio propagation path between the antenna 31 of the base station 30 and the ground station antenna 21 of the satellite ground station 20, based on the reference signal S1 received from the base station 30 via the wired network 50 and the reception signal X received via the ground station antenna 21 of the satellite ground station 20. The interference-cancellation signal generating section 252 functions as signal generating means for generating one or more interference replica signals Y corresponding to one or more interference signals S10 included in the reception signal X, based on the estimation result of the propagation path response (or, the propagation path response and the propagation delay amount) of the interference signal S10 and the reference signal S1.

For example, in FIG. 8, the reference signal S1 obtained from the surrounding base station 30 through the wired network is inputted to each of the interference-estimation processing section 251 and the interference-cancellation signal generating section 252. In the interference cancellation process using the interference suppression apparatus 25, first, the interference-estimation processing section 251 correlates the reference signal S1 received and obtained from the base station 30 with the reception signal X received by the ground station antenna 21, and estimates and obtains the propagation path response and the propagation delay amount of the interference signal (S101). Next, the interference-cancellation signal generating section 252 estimates and generates the interference replica signal Y as the interference cancellation signal from the propagation path response and the propagation delay amount obtained in step S101 and the reference signal S1 obtained from the base station 30 (S102). Next, the synthesizing section 24 combines the interference cancellation signal (interference replica signal) Y generated in step S102 with the reception signal X to suppress (cancel) the interference signal (S103), and outputs a restored signal obtained by restoring the satellite signal.

[Example of Interference Cancellation in case of Single Base Station]

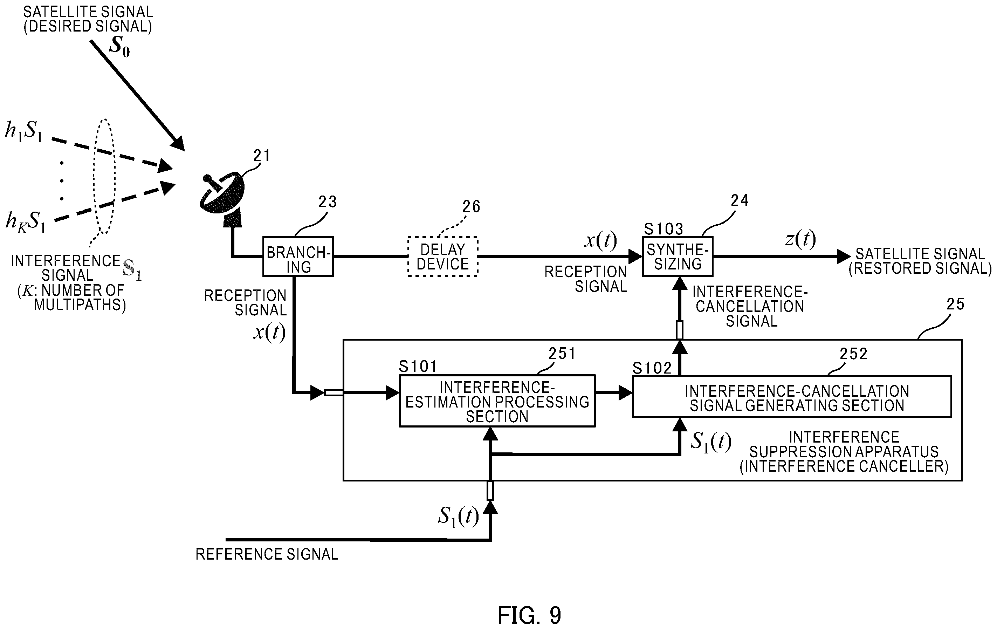

FIG. 9 is an illustration showing a principle of interference cancellation of multipath interference signals in the case of a single base station 30. In FIG. 9, multipath interference signals $h_1S_1(t-\tau_1)$ ... $h_KS_1(t-\tau_K)$ transmitted from the base station 30 and propagated through plural (K) paths are received by the ground station antenna 21 together with the satellite signal $S_0$. A reception signal x(t) expressed by the following equation (2) is branched by the branching section 23 and inputted to the interference-estimation processing section 251.

$$\begin{aligned} x(t) &= h_0 S_0(t) + y(t) \\ &= h_0 S_0(t) + \sum_{k=1}^{K} h_k S_1(t-\tau_k) \end{aligned} \quad \cdots (2)$$

Herein, $h_K$ in the equation (2) is a propagation path response of each interference signal. $\tau_K$ is a propagation delay (hereinafter also referred to as "delay" or "delay amount") of the k(1 to K)-th interference signal, and can be calculated based on the propagation path response. That is, the interference signals from the base station 30 are multipath interference signals, and the interference signal propagated on the k-th propagation path (path) reaches the ground station antenna 21 with the propagation path response $h_K$ and the delay $\tau_k$. If the propagation path response (the propagation path response $h_K$ and the delay $\tau_k$) of each interference signal can be estimated using the reference signal $S_1$

(t), it is possible to restore and output the satellite signal (desired signal) in which the multipath interference signals are suppressed (cancelled) as shown in the restored signal z(t) of the following equation (3). It is noted that $\tau_k$ includes the delay amount of signal processing (usually constant).

$$z(t) = S_0(t) + \sum_{k=1}^{K} h_k S_1(t-\tau_k) - \sum_{k=1}^{K} h_k S_1(t-\tau_k) \approx S_0(t) \quad \cdots (3)$$

In FIG. 9, the reference signal $S_1(t)$ obtained from the base station 30 is inputted to each of the interference-estimation processing section 251 and the interference-cancellation signal generating section 252. The interference-estimation processing section 251 estimates the propagation path response (the propagation path response $h_K$ and the delay $\tau_k$) of each interference signal by a correlation processing between the reference signal $S_1(t)$ and the reception signal x(t). The interference-cancellation signal generating section 252 generates an interference cancellation signal composed of plural interference replica signals for suppressing (cancelling) multipath interference signals, based on the estimation results of the propagation path response (the propagation path response $h_K$ and the delay $\tau_k$) of each interference signal and the reference signal $S_1(t)$.

The interference-estimation processing section 251 in FIG. 9 estimates the propagation path response (the propagation path response $h_K$ and the delay $\tau_k$) of each interference signal, for example, by performing the following correlation processing by digital processing. First, each of the reception signal x(t) and the reference signal $S_1(t)$ sampled at a time interval $\Delta t$ is set as x(i) and $S_1(i)$. $\Delta t$ is a sampling interval, and the discrete time t is expressed as $t = i \times \Delta t$ (i: integer).

Next, by calculating the correlation between the reference signal $S_1(i)$ and the reception signal x(i) using, for example, the correlation calculation equation of the following equation (4), the interference signal included in the reception signal x(i) is detected. The correlation calculation value between the reference signal S1(i-m) shifted by m samples and the reception signal x(i) is set as h(m). All interference signals are detected by shifting m in the range of 0 to $M_S$. It is noted that the $M_S$ in the equation (4) is the number of samples used for correlation calculation. The m is a sample shift amount and is a value in the range of $0 \leqq m \leqq M_S$. Moreover, "<>" in the equation (4) represents an ensemble average, and "*" represents a complex conjugate.

$$h(m) = \left\langle x(i) S_1^*(i-m) \right\rangle = \frac{1}{M_S} \sum_{i=0}^{M_S-1} x(i) S_1^*(i-m) \quad \cdots (4)$$

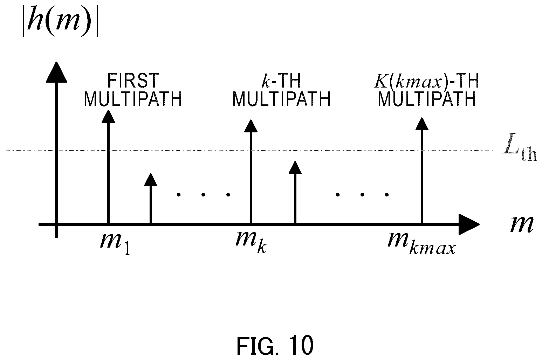

Next, as shown in FIG. 10, the correlation value |h(m)| obtained above is compared with a threshold value $L_{th}$ set in advance to remove noise, and the correlation value |h(m)| that is greater than or equal to the threshold value $L_{th}$ is set as the amplitude of the interference signal. The sample shift amount m of the interference signal whose amplitude is equal to or greater than the threshold value $L_{th}$ is defined as the delay amount of the interference signal. Furthermore, if the total number of the interference signals whose amplitude is equal to or greater than the threshold value $L_{th}$ is Kmax, the amplitude of the k-th interference signal is $|h(m_k)|$, and the delay amount is $m_k$.

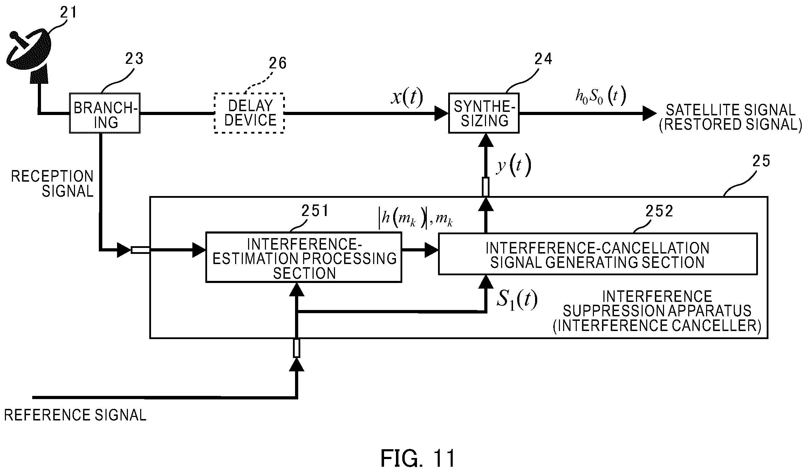

FIG. 11 is an illustration showing a processing example of the interference-cancellation signal generating section 252 of the interference suppression apparatus 25 according to the embodiment. The interference-cancellation signal generating section 252 creates an interference replica signal y(i) by digital processing, for example, as follows.

In FIG. 11, the interference-cancellation signal generating section 252 first creates the k-th interference replica signal $S_{1k}(i)$ of the following equation (5) using the propagation path response $h(m_k)$ and the delay amount $m_k$ obtained by the interference-estimation processing section 251.

$$S_{1k}(i) = h(m_k) S_1(i-m_k) \quad \cdots (5)$$

Next, plural interference replica signals $S_{1k}(i)$ created for k = 1 to Kmax are combined to create an interference cancellation signal y(i) of the following equation (6).

$$y(i)=\sum_{k=1}^{K_{\max}} S_{1k}(i)=\sum_{k=1}^{K_{\max}} h(m_k)S_1(i-m_k) \quad \cdots (6)$$

Next, the interference cancellation signal y(i), which is a digital signal, is DA-converted to create the interference cancellation signal y(t) which is an analog signal. By adding the interference cancellation signal y(t) in reverse phase to the reception signal x(t) in the synthesizing section 24 (by subtracting it from the reception signal x(t)), it is possible to output the restored signal $h_0S_0(t)$ that restores the desired signal (satellite signal) as shown in the following equation (7).

$$x(t)-y(t)=h_0S_0(t) \quad \cdots (7)$$

[Basic System Configuration: Front-Branching Method]

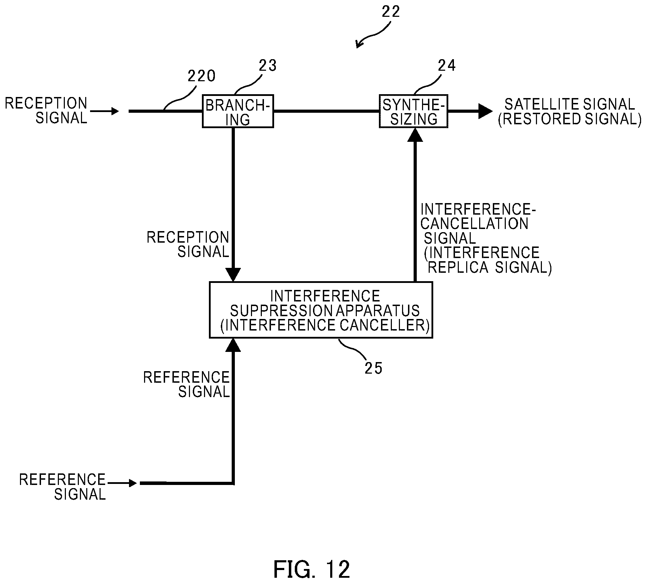

FIG. 12 is an illustration showing a configuration example of a ground station apparatus 22 provided with an interference suppression apparatus 25 of a front-branching method according to the embodiment. In FIG. 12, the branching section (branching means) 23 branches the reception signal and inputs it to the interference suppression apparatus 25 at a front position located closer to the ground station antenna 21 than the synthesizing point of the satellite signal on the main path 220 of the reception signal. That is, before combining the reception signal and the interference cancellation signal, the reception signal is branched from the main path 220 of the reception signal and inputted to the interference suppression apparatus 25. The interference suppression apparatus 25 generates an interference replica signal by performing a correlation processing between the reception signal and the reference signal. The interference signal is suppressed (cancelled) by adding (subtracting) the interference cancellation signal, which is the interference replica signal, to the reception signal in reverse phase, and the restored signal that restores the desired signal (satellite signal) is outputted. In the case of the front-branching method of FIG. 12, the configuration is simple.

[Basic System Configuration: Rear-Branching Method]

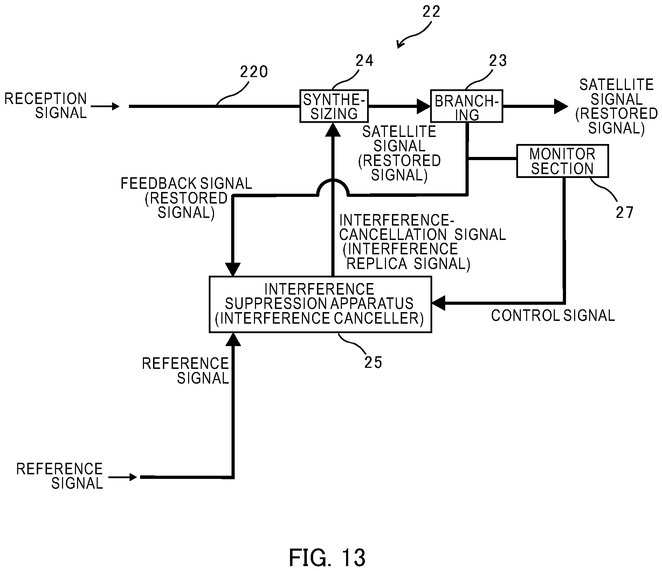

FIG. 13 is an illustration showing a configuration example of a ground station apparatus 22 provided with an interference suppression apparatus 25 of a rear- branching method according to the embodiment. In FIG. 13, the branching section (branching means) 23 branches the reception signal and inputs it to the interference suppression apparatus 25 at a rear position located on an opposite side farther from the ground station antenna 21 than the synthesizing point of the satellite signal on the main path 220 of the reception signal. That is, the restored signal after combining the reception signal and the interference cancellation signal is branched, and inputted to the interference suppression apparatus 25 as a reception signal (feedback signal). The interference signal is suppressed (cancelled) by adding (subtracting) the interference cancellation signal, which is the interference replica signal, to the reception signal in reverse phase, and the restored signal that restores the desired signal (satellite signal) is outputted. In the case of the rear-branching method of FIG. 13, the interference suppression (cancellation) performance is improved.

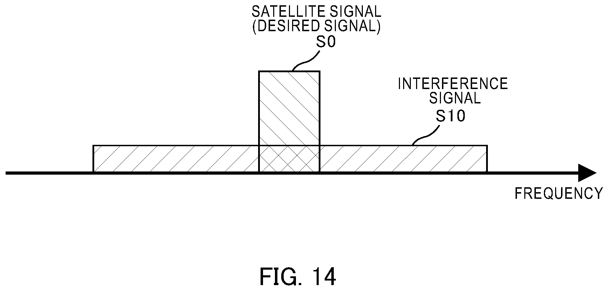

In the ground station apparatus 22 provided with the foregoing interference suppression apparatus 25 of the rear-branching method, as shown in FIG. 13, a monitor section 27 may be provided as a monitoring section for monitoring the feedback signal (reception signal) that is branched by the branching section (branching means) 23 and inputted to the interference suppression apparatus 25. The monitor section 27 monitors, for example, as shown in FIG. 14, an SIR (signal power to interference power ratio) as a reception-signal quality of the feedback signal (reception signal) on the frequency axis. The SIR is a ratio of the satellite signal (desired signal) to the reception power of the interference signal S10. The monitor section 27 transmits a control signal to the interference suppression apparatus 25 based on a monitoring result of the feedback signal (reception signal), and controls an on/off of applying the interference cancellation signal (interference replica signal) to the reception signal (for example, outputting the interference cancellation signal (interference replica signal) to the synthesizing section 24).

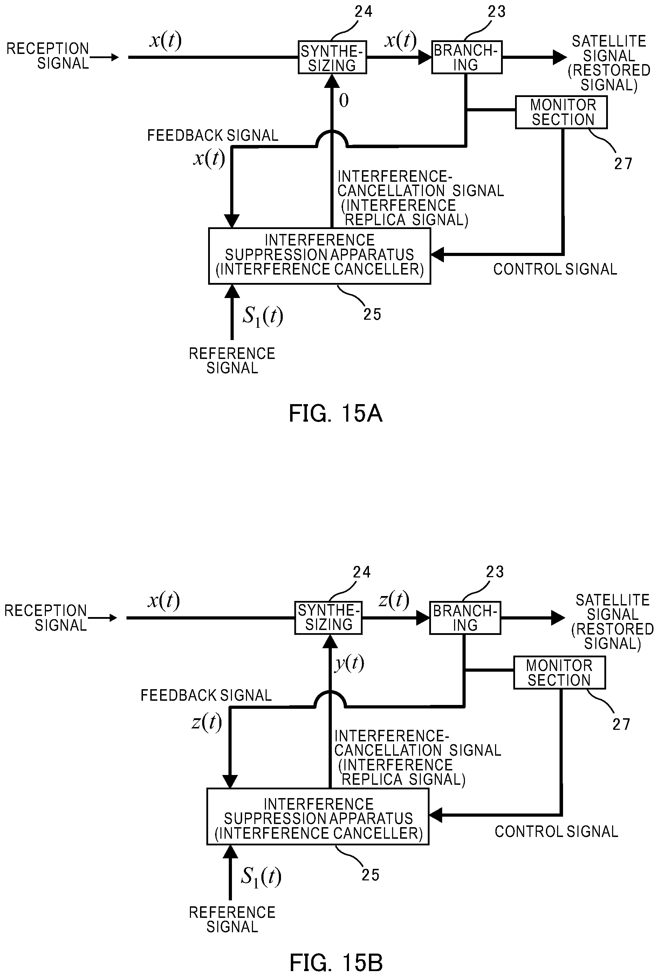

FIGS. 15A and 15B are illustrations showing respectively an example of control in the ground station apparatus 22 of the rear- branching method of FIG. 13. The control examples in FIGS. 15A and 15B are suitable when there is little temporal variation in the propagation path. In the first processing step of FIG. 15A, the interference suppression apparatus 25 does not output the interference cancellation signal (y(t)=0). Therefore, the feedback signal, which is fed back from the branching section 23 to the interference suppression apparatus 25, becomes the reception signal x(i). The interference suppression apparatus 25 generates an interference replica signal of the following equation (8) by a correlation processing between the reception signal x(t) and the reference signal $S_1(t)$, and outputs it as an interference cancellation signal $y_1(t)$. The synthesizing section 24 combines the reception signal x(t) and the interference cancellation signal $y_1(t)$ outputted from

the interference suppression apparatus 25, and outputs a restored signal z(t) of the following equation (9) which restores the satellite signal. Thereafter, the restored signal z(t) is fed back from the branching section 23 to the interference suppression apparatus 25 as the feedback signal.

$$y_1(t) = y(t) - \Delta y_1(t) \quad \cdots (8)$$

$$\begin{aligned} z(t) &= x(t) - y_1(t) \\ &= x(t) + \Delta y_1(t) \end{aligned} \quad \cdots (9)$$

When the SIR of the reception signal monitored by the monitor section 27 satisfies the condition 1 (SIR<threshold value Th1), that is, when the SIR of the reception signal does not satisfy the condition 2 (SIR≧threshold value Th1), as shown in FIG. 15B, the interference suppression apparatus 25 generates an additional-interference cancellation signal of the following equation (10) by a correlation processing between the restored signal z(t) and the reference signal $S_1(t)$, updates the interference cancellation signal as shown in the following equation (11), and outputs the updated interference cancellation signal $y_2(t)$. The synthesizing section 24 combines the reception signal x(t) and the updated interference cancellation signal $y_2(t)$ outputted from the interference suppression apparatus 25, and outputs the restored signal z(t) of the following equation (12).

$$\Delta y_1(t) - \Delta y_2(t) \quad \cdots (10)$$

$$y_2(t) = y_1(t) + \{\Delta y_1(t) - \Delta y_2(t)\} = y(t) - \Delta y_2(t) \quad \cdots (11)$$

$$\begin{aligned} z(t) &= x(t) - y_2(t) \\ &= x(t) + \Delta y_2(t) \end{aligned} \quad \cdots (12)$$

The generation of the additional-interference cancellation signal and the update of the interference cancellation signal are performed until the SIR of the reception signal no longer satisfies the condition 1 (SIR<threshold value Th1), that is, until the SIR of the reception signal comes to satisfy the condition 2 (SIR≧ threshold value Th1).

The interference suppression apparatus 25 continues to update the interference cancellation signal until the SIR of the reception signal monitored by the monitor section 27 satisfies the predetermined condition (SIR<threshold value Th1).

[Multipath-Batch Detection Method]

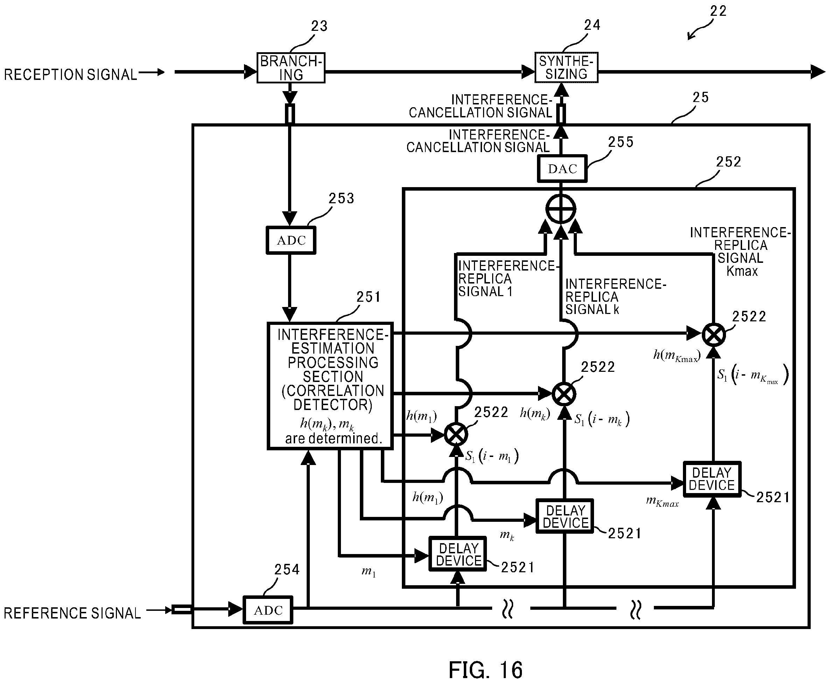

FIG. 16 is an illustration showing a configuration example of a ground station apparatus 22 provided with an interference suppression apparatus 25 of a multipath-batch detection method. In the configuration example of FIG. 16, multipath interference signals composed of plural (Kmax) interference signals with propagation paths different from each other can be collectively detected and suppressed. It is noted that, although the configuration example in FIG. 16 shows a case where the multipath-batch detection method is applied to the ground station apparatus 22 of the front- branching method described above, the multipath-batch detection method may also be applied to the ground station apparatus 22 of the rear-branching method described above.

In FIG. 16, the interference suppression apparatus 25 is provided with an interference-estimation processing section 251 that is common to plural interference signals, and an interference-cancellation signal generating section 252 that is provided with a delay device 2521 and a multiplier 2522 for each interference signal. The reception signal branched by the branching section 23 is converted into a digital signal by an ADC (analog-to-digital converter) 253 and inputted to the interference-estimation processing section 251. The reference signal received from the base station 30 is converted into a digital signal by an ADC 254 and inputted to the interference-estimation processing section 251 and the interference-cancellation signal generating section 252.

The interference-estimation processing section 251 estimates a propagation path response of each interference signal and determines the propagation path response $h(m_k)$ and a delay amount $m_k$ (k=1 to Kmax) of each interference signal based on the reception signal and the reference signal by a correlation detector, and outputs them to the interference-cancellation signal generating section 252.

The interference-cancellation signal generating section 252 is provided with Kmax sets of delay devices 2521 and multipliers 2522 in correspondence with the number (Kmax) of interference signals. The interference-cancellation signal generating section 252 creates (generates) an interference replica signal for each interference signal. For example, the interference-cancellation signal generating section 252, for the k-th interference signal, delays the reference signal $S_1$ (i) by the delay amount $m_k$ outputted from the interference-estimation processing section 251 using the delay device 2521, and multiplies the reference signal $S_1$ (i-$m_k$) after delaying by the propagation path response $h(m_k)$ outputted from the interference-estimation processing section 251 using the multiplier 2522. As a result, an interference replica signal $S_{1k}(i)$ of the following equation (13) corresponding to the k-th interference signal is created (generated).

$$S_{1k}(i) = h(m_k) S_1(i - m_k) \quad \cdots (13)$$

The interference-cancellation signal generating section 252 generates an interference cancellation signal by adding together plural interference replica signals. The interference cancellation signal generated by the interference-cancellation signal generating section 252 is converted into an analog signal by a DAC (digital-to-analog converter) 255 and inputted to the synthesizing section 24.

In the synthesizing section 24, the interference cancellation signal, which is generated by adding together plural interference replica signals, is added to the reception signal in reverse phase and combined. Thereby, the plural interference signals from the plural base stations included in the reception signal can be suppressed (cancelled) all at once.

[Multipath-Sequential Detection Method]

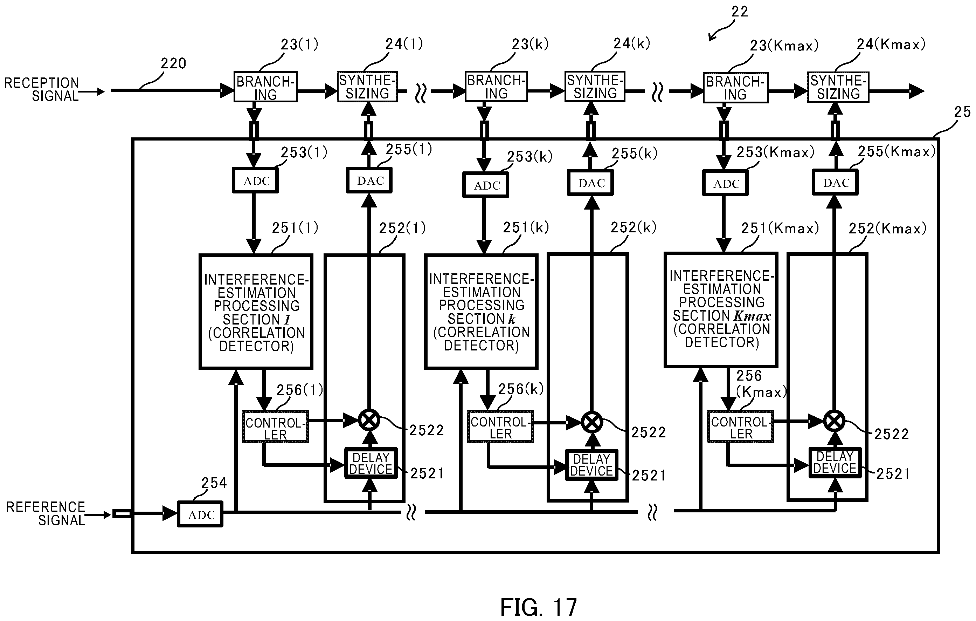

FIG. 17 is an illustration showing a configuration example of a ground station apparatus 22 provided with an interference suppression apparatus 25 of a multipath-sequential detection method. In the configuration example of FIG. 17, multipath interference signals, which are composed of plural (Kmax) interference signals with propagation paths different from each other, can be sequentially detected and suppressed. In particular, in the multipath-sequential detection method of FIG. 17, since the interference signals (interference waves) are detected and suppressed (cancelled) one by one, the accuracy of estimating the propagation path response of the interference signal improves as the interference-estimation processing section becomes a subsequent one, therefore the interference suppression (cancellation) performance improves. It is noted that, although the configuration example in FIG. 17 shows a case where the above-described front- branching method is applied in combination, the multipath-sequential detection method may be applied in combination with the above-described rear- branching method.

In FIG. 17, plural (Kmax) sets of combinations of branching sections 23(k) and synthesizing sections 24(k) are provided on the main path 220 of the reception signal. The interference suppression apparatus 25 is provided with, for each interference signal, an interference-estimation processing section 251(k), an interference-cancellation signal generating section 252(k) provided with a delay device 2521 and a multiplier 2522, an ADC 253(k), and a DAC 255(k). Each interference-estimation processing section 251(k) estimates the propagation path response and the delay for all multipaths. The reception signal branched by the branching section 23(k) is converted into a digital signal by the ADC 253(k), and is inputted to the interference-estimation processing section 251(k). The reference signal received from the base station 30 is converted into a digital signal by the ADC 254, and is inputted to the interference-estimation processing section 251(k) and the interference-cancellation signal generating section 252(k).

The interference suppression apparatus 25 is provided with, for each interference signal, a controller 256(k) as a control section for determining the propagation path response $h(m_k)$ and the delay amount $m_k$ of the interference signal, based on the propagation path responses and the delay amounts for all multipaths which are estimated by the interference-estimation processing section 251(k). Each of the propagation path response $h(m_k)$ and the delay amount $m_k$ of the interference signal, which is determined by the controller 256(k), is outputted to the delay device 2521 and the multiplier 2522 of the corresponding interference-cancellation signal generating section 252(k).

The interference-cancellation signal generating section 252(k) is provided with the delay device 2521 and the multiplier 2522, and creates (generates) an interference replica signal corresponding to the k-th interference signal. For example, the interference-cancellation signal generating section 252(k), for the k-th interference signal, delays the reference signal $S_1$(i) by the delay amount $m_k$ that is outputted from the controller 256(k), using the delay device 2521, and multiplies the reference signal $S_1(i-m_k)$ after delaying by the propagation path response $h(m_k)$ that is outputted from the interference-estimation processing section 251, using the multiplier 2522. As a result, the interference replica signal $S_{1k}(i)$ of the following equation (14) corresponding to the k-th interference signal is created (generated).

$$S_{1k}(i) = h(m_k) S_1(i - m_k) \quad \cdots (14)$$

The interference cancellation signal, which is composed of the interference replica signal generated by the interference-cancellation signal generating section 252(k), is converted into an analog signal by the DAC 255(k), and is inputted to the synthesizing section 24(k).

In the synthesizing section 24(k), the interference cancellation signal, which is composed of the interference replica signal, is added to the reception signal in reverse phase and combined. Thereby, the k-th interference signal can be suppressed (cancelled).

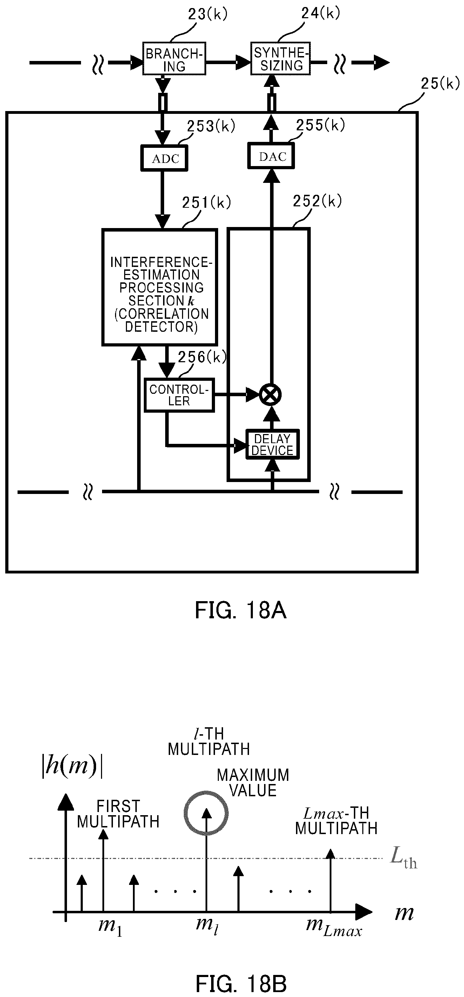

FIG. 18A is an illustration showing an example of a configuration for the k-th interference signal in the interference suppression apparatus 25 of the multipath-sequential detection method of FIG. 17. FIG. 18B is an illustration showing an example of the amplitude $|h(m)|$ of all interference signals in the reception signal inputted to the k-th interference-estimation processing section 251(k) of the multipath-sequential detection method of FIG. 17 and a threshold value Lth. In FIG. 18A, the k-th controller 256(k) determines the multipath interference signal (in the illustrated example, the l-th multipath interference signal) with the largest amplitude $|h(m)|$, among plural (Lmax) multipath interference signals (sample shift amount m = 1 to $m_{Lmax}$) with propagation paths different from each other having the amplitude $|h(m)|$ larger than the predetermined threshold value Lth which are outputted from the interference-estimation processing section 251(k). The k-th controller 256(k) outputs the propagation path response $h(m_l)$ of the l-th multipath interference signal to the multiplier 2522 of the interference-cancellation signal generating section 252(k), and outputs the delay amount $m_l$ corresponding to the sample shift amount of the l-th multipath interference signal, to the delay device 2521 of the interference-cancellation signal generating section 252(k).

In the multipath-sequential detection method of Fig. 17, since the interference signal with the highest power among the plural multipath interference signals is suppressed (cancelled) sequentially, it becomes easier to detect the interference signal with the lower reception power in the subsequent interference-estimation processing section, therefore the interference suppression (cancellation) performance is significantly improved.

[Example of Interference Cancellation in case of Plural Base Stations]

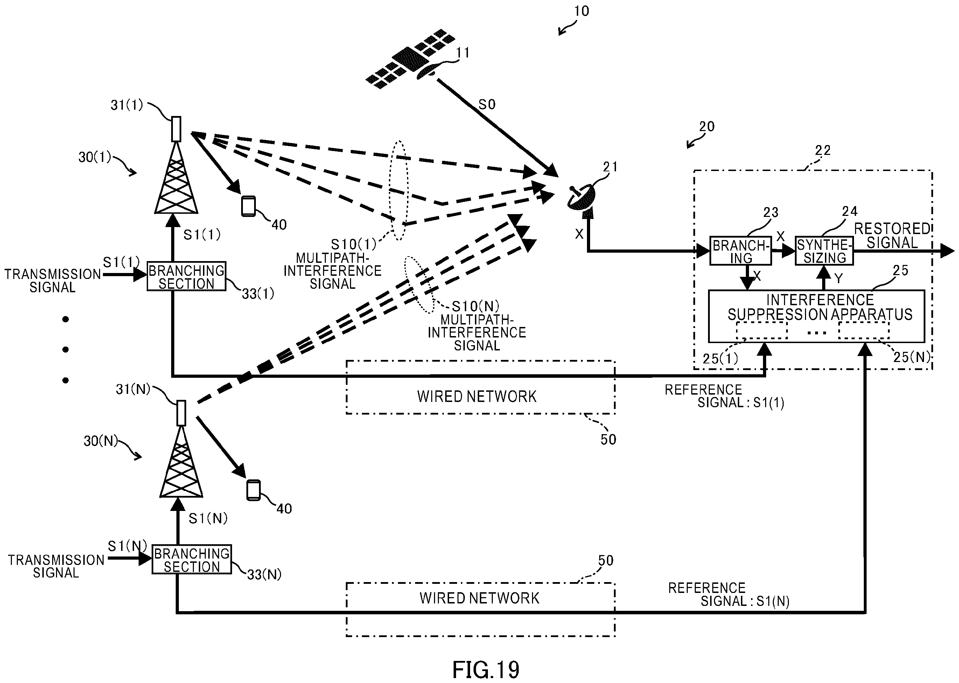

FIG. 19 is an illustration showing an example of an overall configuration of an interference suppression system including a network cooperation between the satellite ground station 20 mounted on the interference suppression apparatus 25 and plural base stations 30(1) to 30(N) according to the embodiment. As shown in FIG. 19, in case that the plural base stations 30(1) to 30(N) exist around the satellite ground station 20, the interference suppression apparatus 25 provided in the ground station apparatus 22 receives and obtains reference signals S1(1) to S1(N) from the base station 30(1) to 30(N) respectively via the wired network 50. The interference suppression apparatus 25, for each base station, generates an interference cancellation signal Y that is composed of plural interference replica signals, based on the reception signal X and the reference signal S1, combines the interference cancellation signal Y and the reception signal X, and outputs the resultant signal, thereby it is capable of restoring the satellite signal in which the multipath interference signals S10(1) to S10(N) from the plural base stations 30(1) to 30(N) are suppressed (cancelled).

It is noted that in FIG. 19, the interference suppression apparatus 25 composed of a single hardware configuration may be used in common to suppress the interference signals from the plural base stations 30(1) to 30(N), or the plural interference suppression apparatuses 25(1) to 25(N), which are respectively composed of individual hardware configurations for the base stations, may be provided in the ground station apparatus 22.

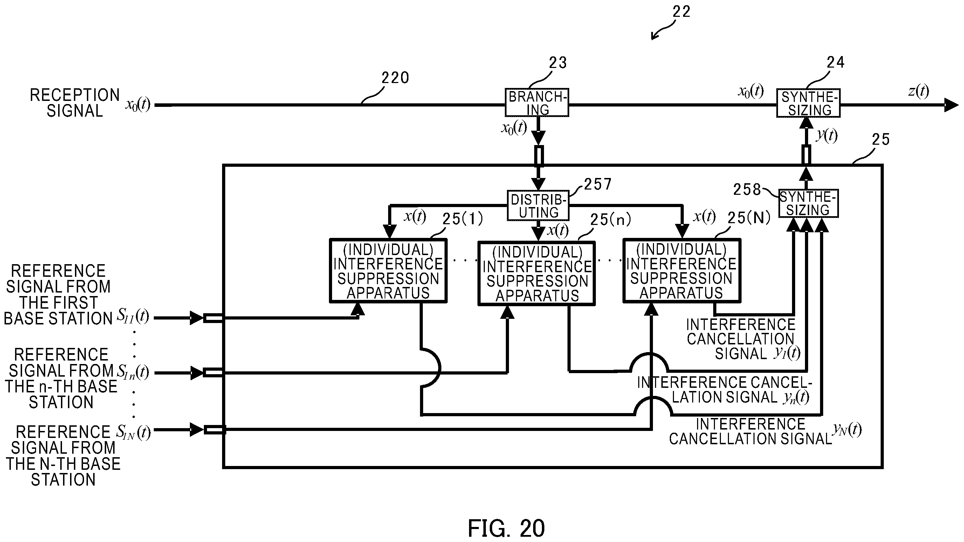

FIG. 20 is an illustration showing a configuration example of a ground station apparatus 22 provided with an interference suppression apparatus 25 of a parallel-signal processing method available for plural base stations 30(1) to 30(N). It is noted that, although the configuration example in FIG. 20 shows a case where the above-described front-branching method is applied in combination, the above-described rear- branching method may be applied in combination with the parallel-signal processing method.

In the interference suppression apparatus 25 of the parallel-signal processing method of FIG. 20, in order to suppress the interference signals from the plural base stations 30(1) to 30(N), the plurality of individual interference suppression apparatuses 25(1) to 25(N) are connected in parallel. The plural interference suppression apparatuses 25(1) to 25(N) respectively receive and obtain reference signals $S_{11}(t)$ to $S_{1N}(t)$ from the corresponding base stations 30(1) to 30(N). The reception signal $x_0(t)$ branched by the branching section 23 on the main path 220 of the reception signal is distributed by a distributing section 257, and the distributed plural reception signals x(t) are inputted to the individual interference suppression apparatuses 25(1) to 25(N). The plural interference suppression apparatuses 25(1) to 25(N) generate plural interference cancellation signals (interference replica signals) $y_1(t)$ to $y_N(t)$ based on the reception signals x(t) and the reference signals $S_{11}(t)$ to $S_{1N}(t)$. The plural interference cancellation signals $y_1(t)$ to $y_N(t)$ are synthesized by a synthesizing section 258 and inputted to the synthesizing section 24 on the main path 220 of the reception signal.

In the synthesizing section 24, an interference cancellation signal, which is generated by adding together the plural interference replica signals, is added to the reception signal $x_0(t)$ in reverse phase and combined, thereby the multipath interference signals from the plural base stations 30(1) to 30(N) are collectively suppressed (cancelled).

According to the parallel-signal processing method in FIG. 20, a processing for suppressing the interference signals from the plural base stations 30(1) to 30(N) can be performed simultaneously in parallel, therefore a processing delay time is reduced.

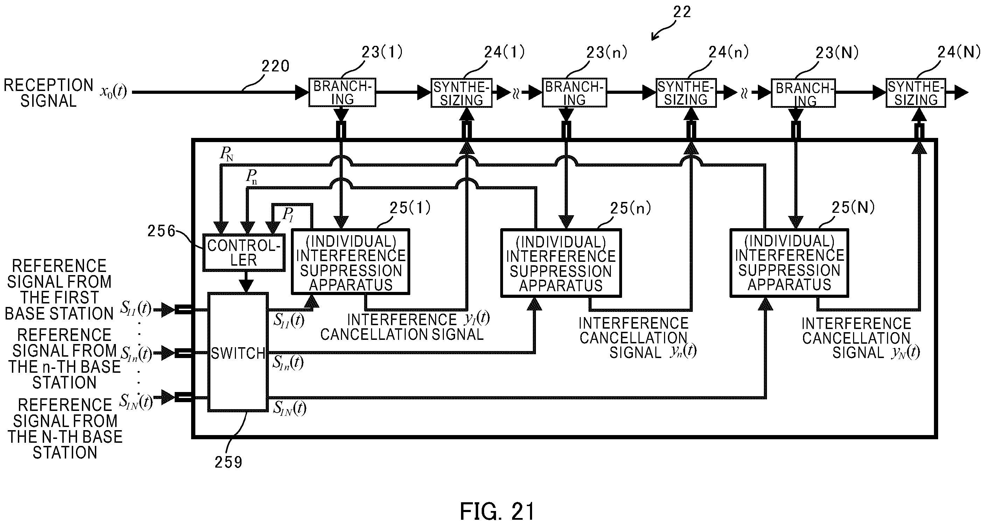

FIG. 21 is an illustration showing a configuration example of a ground station apparatus provided with an interference suppression apparatus of a serial-signal processing method available for plural base stations. It is noted that, although the configuration example in FIG. 21 shows a case where the above-described front-branching method is applied in combination, the above-described rear- branching method may be applied in combination with the serial-signal processing method.

In the interference suppression apparatus 25 of the serial-signal processing method in FIG. 21, in order to reduce the interference from the plural base stations 30(1) to 30(N), the plurality of individual interference suppression apparatuses 25(1) to 25(N) are connected in series. Further, plural (N) sets of combinations of branching sections 23(n) and synthesizing sections 24(n) are provided on the main path 220 of the reception signal. The plural interference suppression apparatuses 25(1) to 25(N) receive and obtain reference signals $S_{11}(t)$ to $S_{1N}(t)$ from the corresponding base stations 30(1) to 30(N) via a switch 259, and receive reception signals branched by the plural branching sections 23(1) to 23(N). The interference suppression apparatuses 25(1) to 25(N) generate plural interference cancellation signals (interference replica signals) $y_1(t)$ to $y_N(t)$ based on the reception signals x(t) and the reference signals $S_{11}(t)$ to $S_{1N}$ (t). The plural interference cancellation signals $y_1(t)$ to $y_N(t)$ are inputted to the synthesizing sections 24(1) to 24(N) on the main path 220 of the reception signal.

In the plural synthesizing sections 24(1) to 24(N), the interference cancellation signals $y_1(t)$ to $y_N(t)$ are added to the reception signal in reverse phase and combined, thereby the multipath interference signals from the plural base stations 30(1) to 30(N) are sequentially suppressed (cancelled).

In the serial-signal processing method in FIG. 21, since the multipath interference signals from the plural base stations 30(1) to 30(N) are sequentially suppressed (cancelled), the amount of reduction of interference signals can be increased as the interference suppression apparatus becomes a subsequent one.

The order of performing the suppression processing of the multipath interference signals from the plural base stations 30(1) to 30(N) may be determined based on the multipath total power obtained by a correlation processing in the plural interference suppression apparatuses 25(1) to 25(N), for example, as shown in processing steps 1 and 2 below.

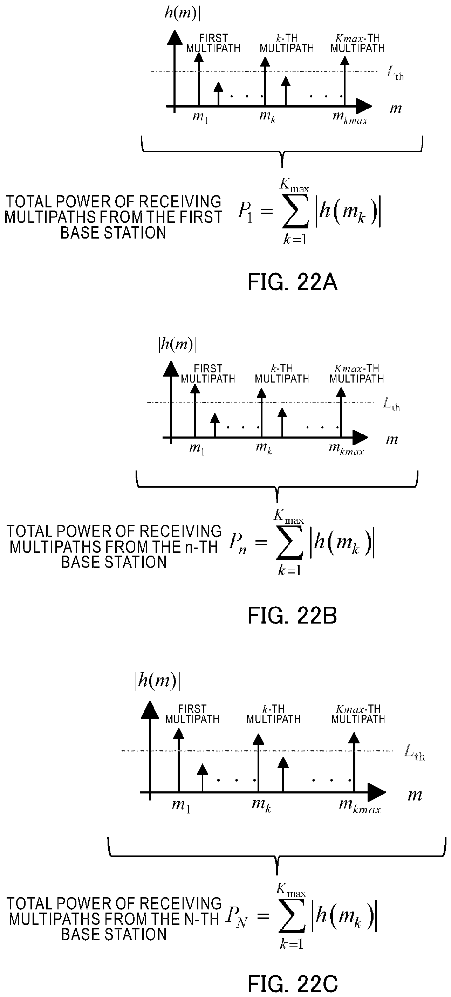

Each of FIGS. 22A, 22B and 22C is an illustration showing an example of the amplitudes |h(m)| of all interference signals in the reception signal (intermediate restored signal) inputted to the interference-estimation processing section in the 1-th, n-th, and N-th interference suppression apparatuses 25(1), 25(n), and 25(N) of FIG. 21, and a threshold value Lth.

Processing Step 1:

First, each of the total powers $P_1$, $P_n$, and $P_N$ of receiving multipaths from each of the base stations 30(1), 30(n), and 30(N) is determined, by performing a correlation processing between the reception signal and the reference signal in each of the interference suppression apparatuses 25(1), 25(n), and 25(N), and squaring and summing the |h(m)| that exceed the predetermined threshold value Lth as shown in FIGS. 22A, 22B and 22C.

Processing Step 2:

Next, the $P_1$, $P_n$, and $P_N$ are rearranged in descending order, and an interference processing is performed in the order of base stations with the largest total reception power of receiving multipaths. For example, if $P_n>P_N>P_1$, by controlling the switch 259 on and off with the controller 256 and changing the path connections, the reference signals are supplied to the interference suppression apparatuses 25(n), 25(N), and 25(1) in the order of base stations 30(n), 30(N) and 30(1), and the interference signals from the base stations 30(n), 30(N) and 30(1) are suppressed (cancelled) in order. In this way, since the interference signals are suppressed (cancelled) from the base stations with a large total reception power P, the amount of reduction in interference signals increases as the interference suppression apparatus becomes a subsequent one.

It is noted that, in each of the configuration examples of the parallel-signal processing method of FIG. 20 and the serial-signal processing method of FIGS. 21 and 22A to 22C, which are available for the interferences from the plural base stations, the multipath-batch detection method exemplified in FIG. 16 described above may be combined.

For example, the plural interference suppression apparatuses 25(1) to 25(N) in FIGS. 20 and 21, for each of the plural base stations 30(1) to 30(N), estimate propagation path responses and delay amounts of plural interference signals in plural radio propagation paths between the base station antenna 31 and the ground station antenna 21, and generate plural interference replica signals corresponding to the plural interference signals included in the reception signal, based on the estimation results of the propagation path response and the delay amounts of the plural interference signals and the reference signals from the base station 30. The synthesizing section 24 synthesizes the satellite signals in which the plural interference signals are suppressed by collectively applying the plural interference replica signals respectively corresponding to the plural base stations 30(1) to 30(N), which are generated by the plural interference suppression apparatuses 25(1) to 25(N), to the reception signal. Thereby, it is possible to output a restored signal by suppressing the multipath interference signals from each of the plural base stations 30(1) to 30(N) and restoring the satellite signal.

Further, for example, plural sets of the plural interference suppression apparatuses 25(1) to 25(N) and the synthesizing sections 24(1) to 25(N) in FIGS. 20 and 21 are provided, for each of the plural base stations 30(1) to 30(N), in correspondence with plural interference signals in plural radio propagation paths between the base station antenna 31 and the ground station antenna 21. The plural interference suppression apparatuses in each of the plural base stations 30(1) to 30(N) estimate propagation path responses and delay amounts of plural interference signals in plural radio propagation paths between the base station antenna 31 and the ground station antenna 21, and generate plural interference replica signals corresponding to the plural interference signals included in the reception signal, based on the estimation results of the propagation path responses and delay amounts of the plural interference signals and the reference signals. Then, for the plural interference signals in each of the plural base stations 30(1) to 30(N), the estimation of the propagation path responses and the delay amounts of the interference signals and the generation of the interference replica signals, and the application of the interference replica signals to the reception signals and the synthesis of the satellite signals are sequentially executed. Thereby, it is possible to output a restored signal by suppressing the multipath interference signals from each of the plural base stations 30(1) to 30(N) and restoring the satellite signal.

As described above, according to the present embodiment, in the radio communication transmitted from the base station 30 of the mobile communication system such as the 5th generation, etc. to the terminal apparatus, in the case of using the same frequency band as the downlink radio communication received by the satellite ground station 20 of the satellite communication system, it is possible to suppress interference (in particular, multipath interference) from the base station 30 in the downlink reception signal of the satellite ground station 20 regardless of the separation distance between the satellite ground station 20 and the base station 30.

It is noted that the present invention is also applicable to communication methods of mobile communication systems other than the 5th generation.

Since the present invention is capable of realizing high quality communications of the downlink in the satellite ground station while suppressing interference signals from the base stations, even when the same frequency band is used for the base station of the next-generation mobile communication system such as the 5th generation, etc. and the downlink of the satellite communication system, it is possible to contribute to achieving Goal 9 of the Sustainable Development Goals (SDGs), "Create a foundation for industry and technological innovation".

It is noted that, the process steps and configuration elements of the system described in the present description can be implemented with various means. For example, these process steps and configuration elements may be implemented with hardware, firmware, software, or a combination thereof.

With respect to hardware implementation, means such as processing units or the like used for establishing the foregoing steps and configuration elements in entities (for example, various kinds of radio communication apparatuses, Node B, terminal, hard disk drive apparatus, or optical disk drive apparatus) may be implemented in one or more of an application-specific IC (ASIC), a digital signal processor (DSP), a digital signal processing apparatus (DSPD), a programmable logic device (PLD), a field programmable gate array (FPGA), a processor, a controller, a microcontroller, a microprocessor, an electronic device, other electronic unit, computer, or a combination thereof, which are designed so as to perform a function described in the present specification.

With respect to the firmware and/or software implementation, means such as processing units or the like used for establishing the foregoing configuration elements may be implemented with a program (for example, code such as procedure, function, module, instruction, etc.) for performing a function described in the present specification. In general, any computer/processor readable medium of materializing the code of firmware and/or software may be used for implementation of means such as processing units and so on for establishing the foregoing steps and configuration elements described in the present specification. For example, in a control apparatus, the firmware and/or software code may be stored in a memory and executed by a computer or processor. The memory may be implemented within the computer or processor, or outside the processor. Further, the firmware and/or software code may be stored in, for example, a medium capable being read by a computer or processor, such as a random-access memory (RAM), a read-only memory (ROM), a non-volatility random-access memory (NVRAM), a programmable read-only memory (PROM), an electrically erasable PROM (EEPROM), a FLASH memory, a floppy (registered trademark) disk, a compact disk (CD), a digital versatile disk (DVD), a magnetic or optical data storage unit, or the like. The code may be executed by one or more of computers and processors, and a certain aspect of functionalities described in the present specification may by executed by a computer or processor.

The medium may be a non-transitory recording medium. Further, the code of the program may be executable by being read by a computer, a processor, or another device or an apparatus machine, and the format is not limited to a specific format. For example, the code of the program may be any of a source code, an object code, and a binary code, and may be a mixture of two or more of those codes.

The description of embodiments disclosed in the present specification is provided so that the present disclosures can be produced or used by those skilled in the art. Various modifications of the present disclosures are readily apparent to those skilled in the art and general principles defined in the present specification can be applied to other variations without departing from the spirit and scope of the present disclosures. Therefore, the present disclosures should not be limited to examples and designs described in the present specification and should be recognized to be in the broadest scope corresponding to principles and novel features disclosed in the present specification.

REFERENCE SIGNS LIST

10: artificial satellite
11: satellite station antenna
20: satellite ground station
21: ground station antenna
22: ground station apparatus
23: branching section
24: synthesizing section
25: interference suppression apparatus
26: delay device
27: monitor section
30: base station
31: base station antenna
33: branching section
34: delay device
40: terminal apparatus
50: wired network
90: building
220: main path of reception signal
251: interference-estimation processing section
252: interference-cancellation signal generating section
256: controller
257: distributing section
258: synthesizing section
259: switch
2521: delay device
2522: multiplier

**Claims**

**1.** An interference suppression apparatus for suppressing interference in a reception signal of a satellite ground station that receives a downlink satellite signal transmitted from a satellite station mounted on an artificial satellite, the interference suppression apparatus comprising:

reference-signal receiving means for receiving, via a wired network, a reference signal branched from a transmission signal transmitted from an antenna of a base station of a mobile communication system, the base station performing a radio communication with a terminal apparatus using a same frequency band as downlink radio waves from the satellite station;
estimating means for estimating a propagation delay amount and a propagation path response of an interference signal from the base station in a radio propagation path between the antenna of the base station and an antenna of the satellite ground station, based on the reference signal received from the base station via the wired network and a reception signal received via the antenna of the satellite ground station; and

signal generating means for generating an interference replica signal corresponding to an interference signal included in the reception signal, based on estimation results of the propagation delay amount and the propagation path response of the interference signal, and the reference signal.

**2.** A satellite ground station comprising an antenna for receiving downlink radio waves transmitted from a satellite station, and a satellite-ground station apparatus for processing a reception signal received by the antenna, wherein the satellite-ground station apparatus comprises:

the interference suppression apparatus according to claim 1;

branching means for branching the reception signal received by the antenna and inputting the branched reception signal to the interference suppression apparatus; and

synthesizing means for synthesizing the satellite signal in which the interference signal is suppressed by applying the interference replica signal generated by the interference suppression apparatus, to the reception signal.

**3.** The satellite ground station according to claim 2, wherein the branching means branches the reception signal at a front position located closer to the antenna than a synthesizing point of the satellite signal on a main path of the reception signal, and inputs the branched reception signal to the interference suppression apparatus.

**4.** The satellite ground station according to claim 2, wherein the branching means branches the reception signal at a rear position located on an opposite side farther from the antenna than a synthesizing point of the satellite signal on a main path of the reception signal, and inputs the branched reception signal to the interference suppression apparatus.

**5.** The satellite ground station according to claim 4, comprising: monitoring means for monitoring the signal that is branched by the branching means and inputted to the interference suppression apparatus, and controlling an on/off of applying the interference replica signal to the reception signal based on a monitoring result of the signal.

**6.** The satellite ground station according to claim 2,

wherein the estimating means estimates plural sets of propagation path responses and propagation delay amounts of plural interference signals in plural radio propagation paths between the antenna of the base station and the antenna of the satellite ground station,

wherein the signal generating means generates plural interference replica signals corresponding to plural interference signals included in the reception signal, based on estimation results of the propagation path responses and the propagation delay amounts of the plural interference signals, and the reference signal, and

wherein the synthesizing means synthesizes the satellite signal in which the plural interference signals are suppressed by collectively applying the plural interference replica signals generated by the interference suppression apparatus to the reception signal.

**7.** The satellite ground station according to claim 6, wherein the satellite ground station performs the generation of the interference replica signal by the signal generating means, and the application of the interference replica signal and the synthesis of the satellite signal by the synthesizing means, with respect to one or more interference signals in which a power calculated based on the propagation path response of the interference signal by the estimating means is greater than a predetermined threshold value among the plural interference signals.

**8.** The satellite ground station according to claim 2, comprising plural sets of the estimating means, the signal generating means and the synthesizing means, in correspondence with plural interference signals in plural radio propagation paths between the antenna of the base station and the antenna of the satellite ground station,

wherein the plural estimating means estimate plural sets of propagation path responses and propagation delay amounts of the plural interference signals in the plural radio propagation paths between the antenna of the base station and the antenna of the satellite ground station,

wherein the plural signal generating means generate plural interference replica signals corresponding to the plural interference signals included in the reception signal, based on estimation results of the propagation path responses and the propagation delay amounts of the plural interference signals, and the reference signal, and wherein the satellite ground station sequentially performs the estimation of the propagation path response and the propagation delay amount of the interference signal by the estimating means, the generation of the interference replica signal by the signal generating means, and the application of the interference replica signal and the synthesis of the satellite signal by the synthesizing means, with respect to the plural interference signals.

**9.** The satellite ground station according to claim 8,
wherein each of the plural signal generating means performs the generation of the interference replica signal by the signal generating means, and the application of the interference replica signal and the synthesis of the satellite signal by the synthesizing means, with respect to an interference signal in which a maximum power calculated based on the propagation path response of the interference signal by the estimating means among the plural interference signals.

**10.** The satellite ground station according to claim 2,

wherein the reference-signal receiving means receives plural reference signals branched from transmission signals transmitted from antennas of plural base stations of the mobile communication system, via a wired network,
wherein the estimating means estimates plural sets of propagation path responses and propagation delay amounts of plural interference signals in plural radio propagation paths between the antennas of the plural base stations and the antenna of the satellite ground station, based on the plural reference signals received from the plural base stations via the wired network and the reception signal received via the antenna of the satellite ground station,
wherein the signal generating means generates plural interference replica signals corresponding to the plural interference signals included in the reception signal, based on estimation results of the plural sets of the propagation path responses and the propagation delay amounts of the plural interference signals, and the plural reference signals, and
wherein the synthesizing means synthesizes the satellite signal in which the plural interference signals are suppressed by collectively applying the plural interference replica signals generated by the interference suppression apparatus, to the reception signal.

**11.** The satellite ground station according to claim 10,

wherein the estimating means estimates, for each of the plural base stations, the plural sets of the propagation path responses and the propagation delay amounts of the plural interference signals in the plural radio propagation paths between the antenna of the base station and the antenna of the satellite ground station,
wherein the signal generating means generates, for each of the plural base stations, the plural interference replica signals corresponding to the plural interference signals included in the reception signal, based on the estimation results of the plural sets of the propagation path response and the propagation delay amounts of the plural interference signals, and the reference signal, and
wherein the synthesizing means synthesizes the satellite signal in which the plural interference signals are suppressed by collectively applying the plural interference replica signals generated by the interference suppression apparatus so as to be respectively corresponding to the plural base stations, to the reception signal.

**12.** The satellite ground station according to claim 10, comprising, for each of the plural base stations, plural sets of the estimating means, the signal generating means and the synthesizing means, in correspondence with plural interference signals in plural radio propagation paths between the antenna of the base station and the antenna of the satellite ground station,

wherein the plural estimating means in each of the plural base stations estimate the plural sets of propagation path responses and propagation delay amounts of the plural interference signals in the plural radio propagation paths between the antenna of the base station and the antenna of the satellite ground station,
wherein the plural signal generating means in each of the plural base stations generate plural interference replica signals corresponding to the plural interference signals included in the reception signal, based on estimation results of the propagation path responses and the propagation delay amounts of the plural interference signals, and the reference signal, and
wherein the satellite ground station sequentially performs the estimation of the propagation path response and the propagation delay amount of the interference signal by the estimating means, the generation of the interference replica signal by the signal generating means, and the application of the interference replica signal and the synthesis of the satellite signal by the synthesizing means, with respect to the plural interference signals in each of the plural base stations.

**13.** The satellite ground station according to claim 2,

wherein the reference-signal receiving means receives plural reference signals branched from transmission signals transmitted from antennas of plural base stations of the mobile communication system, via the wired network,
wherein the satellite ground station comprises plural sets of the estimating means, the signal generating means and the synthesizing means in correspondence with the plural base stations, and
wherein the satellite ground station performs sequentially the estimation of the propagation path response of the interference signal by the estimating means, the generation of the interference replica signal by the signal generating means, and the application of the interference replica signal and the synthesis of the satellite signal by the synthesizing means, with respect to the plural base stations.

**14.** The satellite ground station according to claim 13,
wherein the satellite ground station performs the generation of the interference replica signal by the signal generating means, and the application of the interference replica signal and the synthesis of the satellite signal by the synthesizing means, in the order of the base station with the higher total power of the plural interference signals calculated based on the propagation path response of the interference signal by the estimating means, with respect to the plural base stations.

**15.** The satellite ground station according to claim 13,

wherein the estimating means estimates, for each of the plural base stations, the plural sets of the propagation path responses and the propagation delay amounts of the plural interference signals in the plural radio propagation paths between the antenna of the base station and the antenna of the satellite ground station,
wherein the signal generating means generates, for each of the plural base stations, the plural interference replica signals corresponding to the plural interference signals included in the reception signal, based on the estimation results of the plural sets of the propagation path responses and the propagation delay amounts of the plural interference signals, and the reference signal, and
wherein the synthesizing means synthesizes the satellite signal in which the plural interference signals are suppressed by collectively applying the plural interference replica signals generated by the interference suppression apparatus so as to be respectively corresponding to the plural base stations, to the reception signal.

**16.** The satellite ground station according to claim 13, comprising, for each of the plural base stations, plural sets of the estimating means, the signal generating means and the synthesizing means, in correspondence with plural interference signals in plural radio propagation paths between the antenna of the base station and the antenna of the satellite ground station,

wherein the plural estimating means in each of the plural base stations estimate the plural sets of propagation path responses and propagation delay amounts of the plural interference signals in the plural radio propagation paths between the antenna of the base station and the antenna of the satellite ground station,
wherein the plural signal generating means in each of the plural base stations generate plural interference replica signals corresponding to plural interference signals included in the reception signal, based on estimation results of the propagation path responses and the propagation delay amounts of the plural interference signals, and the reference signal, and
wherein the satellite ground station sequentially performs the estimation of the propagation path response and the propagation delay amount of the interference signal by the estimating means, the generation of the interference replica signal by the signal generating means, the application of the interference replica signal and the synthesis of the satellite signal by the synthesizing means, with respect to the plural interference signals in each of the plural base stations.

**17.** The satellite ground station according to any one of claims 2 to 16, comprising a delay device for delaying the reception signal between the antenna and a branching point of the reception signal.

**18.** A system comprising:

the satellite ground station according to any one of claims 2 to 16; and
one or more base stations of the mobile communication system.

**19.** The system according to claim 18, comprising a delay device for delaying the transmission signal between a base station apparatus of the base station and the antenna.

**20.** An interference suppression method for suppressing interference in a reception signal of a satellite ground station that receives a downlink satellite signal transmitted from a satellite station mounted on an artificial satellite, the method comprising:

receiving, via a wired network, a reference signal branched from a transmission signal transmitted from an antenna of a base station of a mobile communication system, the base station performing a radio communication with a terminal apparatus using a same frequency band as downlink radio waves from the satellite station;
estimating a propagation path response of an interference signal from the base station in a radio propagation path between the antenna of the base station and an antenna of the satellite ground station, based on the reference signal received from the base station via the wired network and a reception signal received via the antenna of the satellite ground station;
generating an interference replica signal corresponding to the interference signal included in the reception signal, based on an estimation result of the propagation path response of the interference signal, and the reference signal; and
synthesizing the satellite signal in which the interference signal is suppressed by applying the interference replica signal to the reception signal.

**21.** A program executed by a computer or processor provided in an interference suppression apparatus for suppressing interference in a reception signal of a satellite ground-station that receives a downlink satellite signal transmitted from a satellite station mounted on an artificial satellite, the program comprising:

a program code for receiving, via a wired network, a reference signal branched from a transmission signal transmitted from an antenna of a base station of a mobile communication system, the base station performing a radio communication with a terminal apparatus using a same frequency band as downlink radio waves from the satellite station;
a program code for estimating a propagation path response of an interference signal from the base station in a radio propagation path between an antenna of the base station and an antenna of the satellite ground station, based on the reference signal received from the base station via the wired network and a reception signal received via the antenna of the satellite ground station; and
a program code for generating an interference replica signal corresponding to the interference signal included in the reception signal, based on an estimation result of the propagation path response of the interference signal, and the reference signal.

10
11
S0
SATELLITE
SIGNAL
31
30
21
20
40
S10
INTERFERENCE
SIGNALS (MULTIPATHS)
X
RECEPTION
SIGNAL
22
S0
SATELLITE
SIGNAL
(RESTORED
SIGNAL)
D

FIG. 1

20
Bm(2)
31
30
40
Bm(1)

FIG. 2A

90
20
Bm(2)
31
30
S10
90
40
Bm(1)

FIG. 2B

10
11
S0
31
30
40
S10
20
21
22
X
S0
S10
23
BRANCH-ING
X
24
SYNTHE-SIZING
Y
S0
INTERFERENCE SUPPRESSION APPARATUS
25
S1
32
gNB
S1
BRANCH-ING
33
S1 TRANSMISSION SIGNAL
S1 REFERENCE SIGNAL
WIRED NETWORK
50

FIG. 3

SATELLITE SIGNAL (DESIRED SIGNAL)
$h_0S_0(t)$
INTERFERENCE SIGNAL
$h_1S_1(t)$
31
30
21
RECEPTION SIGNAL
SATELLITE SIGNAL
$h_0S_0(t)$
$h_1S_1(t)$
INTERFERENCE SIGNAL
REFERENCE SIGNAL
22
23
BRANCH-ING
$h_0S_0(t)+h_1S_1(t)$
$h_0S_0(t)+h_1S_1(t)$
INTERFERENCE SUPPRESSION APPARATUS (INTERFERENCE CANCELLER)
25
$S_1(t)$
24
SYNTHE-SIZING
$-h_1S_1(t)$
INTERFERENCE-CANCELLATION SIGNAL (INTERFERENCE-REPLICA SIGNAL)
SATELLITE SIGNAL (RESTORED SIGNAL)
$h_0S_0(t)+h_1S_1(t)-h_1S_1(t)=h_0S_0(t)$

FIG. 4

20
21
22
23
BRANCH-ING
X
X
X
24
SYNTHE-SIZING
S0
Y
INTERFERENCE-CANCELLATION SIGNAL (INTERFERENCE-REPLICA SIGNAL)
INTERFERENCE SUPPRESSION APPARATUS (INTERFERENCE CANCELLER)
25
S1
TRANSMISSION VELOCITY OF INTERFERENCE SIGNAL: Vi
TRANSMISSION VELOCITY OF REFERENCE SIGNAL: Vr ( < Vi)
WIRED NETWORK
50
30
31
33
BRANCH-ING
S1
S1
S1
gNB
32

FIG. 5

20
30
31
INTERFERENCE SIGNAL
21
22
26
DELAY DEVICE
X'
23
BRANCH-ING
X'
24
SYNTHE-SIZING
S0
X
X'
Y
S1
S1
BRANCH-ING
33
gNB
32
S1
INTERFERENCE SUPPRESSION APPARATUS (INTERFERENCE CANCELLER)
S1
25
REFERENCE SIGNAL
WIRED NETWORK
50

FIG. 6

30
31
INTERFERENCE SIGNAL
21
20
22
23
24
X'
BRANCH-ING
SYNTHE-SIZING
S0
Y
S1'
DELAY DEVICE
34
S1
BRANCH-ING
33
gNB
32
INTERFERENCE SUPPRESSION APPARATUS (INTERFERENCE CANCELLER)
25
REFERENCE SIGNAL
WIRED NETWORK
50

FIG. 7

SATELLITE SIGNAL
(DESIRED SIGNAL)
INTERFERENCE
SIGNAL
21
23
BRANCH-
ING
RECEPTION
SIGNAL
26
DELAY
DEVICE
X
RECEPTION
SIGNAL
S103
24
SYNTHE-
SIZING
SATELLITE SIGNAL
(RESTORED SIGNAL)
Y
INTERFERENCE-CANCELLATION
SIGNAL (INTERFERENCE REPLICA
SIGNAL)
25
X
S101
251
INTERFERENCE-
ESTIMATION PROCESSING
SECTION
S102
252
INTERFERENCE-CANCELLATION
SIGNAL GENERATING SECTION
INTERFERENCE
SUPPRESSION APPARATUS
(INTERFERENCE CANCELLER)
S1
REFERENCE SIGNAL

FIG. 8

SATELLITE SIGNAL (DESIRED SIGNAL)
$S_0$
$h_1 S_1$
$h_K S_1$
INTERFERENCE SIGNAL
$S_1$
(K: NUMBER OF MULTIPATHS)
21
23
BRANCH-ING
RECEPTION SIGNAL
$x(t)$
26
DELAY DEVICE
$x(t)$
RECEPTION SIGNAL
S103
24
SYNTHE-SIZING
$z(t)$
SATELLITE SIGNAL (RESTORED SIGNAL)
INTERFERENCE-CANCELLATION SIGNAL
25
S101
251
INTERFERENCE-ESTIMATION PROCESSING SECTION
S102
252
INTERFERENCE-CANCELLATION SIGNAL GENERATING SECTION
$S_1(t)$
INTERFERENCE SUPPRESSION APPARATUS (INTERFERENCE CANCELLER)
$S_1(t)$
REFERENCE SIGNAL

FIG. 9

$|h(m)|$
FIRST MULTIPATH
$k$-TH MULTIPATH
$K(kmax)$-TH MULTIPATH
$L_{th}$
$m_1$
$m_k$
$m_{kmax}$
$m$

FIG. 10

21
23
BRANCH-ING
RECEPTION SIGNAL
26
DELAY DEVICE
$x(t)$
24
SYNTHE-SIZING
$h_0 S_0(t)$
SATELLITE SIGNAL (RESTORED SIGNAL)
25
251
INTERFERENCE-ESTIMATION PROCESSING SECTION
$|h(m_k)|, m_k$
252
INTERFERENCE-CANCELLATION SIGNAL GENERATING SECTION
$y(t)$
$S_1(t)$
INTERFERENCE SUPPRESSION APPARATUS (INTERFERENCE CANCELLER)
REFERENCE SIGNAL


FIG. 11

22
220
23
24
RECEPTION SIGNAL
BRANCH-ING
SYNTHE-SIZING
SATELLITE SIGNAL (RESTORED SIGNAL)
RECEPTION SIGNAL
INTERFERENCE-CANCELLATION SIGNAL (INTERFERENCE REPLICA SIGNAL)
INTERFERENCE SUPPRESSION APPARATUS (INTERFERENCE CANCELLER)
25
REFERENCE SIGNAL
REFERENCE SIGNAL

FIG. 12

22
24
23
220
RECEPTION SIGNAL
SYNTHE-SIZING
BRANCH-ING
SATELLITE SIGNAL (RESTORED SIGNAL)
SATELLITE SIGNAL (RESTORED SIGNAL)
MONITOR SECTION
FEEDBACK SIGNAL (RESTORED SIGNAL)
27
INTERFERENCE-CANCELLATION SIGNAL (INTERFERENCE REPLICA SIGNAL)
INTERFERENCE SUPPRESSION APPARATUS (INTERFERENCE CANCELLER)
CONTROL SIGNAL
REFERENCE SIGNAL
25
REFERENCE SIGNAL

FIG. 13

SATELLITE SIGNAL
(DESIRED SIGNAL)
S0
INTERFERENCE
SIGNAL
S10
FREQUENCY

FIG. 14

RECEPTION SIGNAL
$x(t)$
24
SYNTHE-SIZING
$x(t)$
23
BRANCH-ING
SATELLITE SIGNAL (RESTORED SIGNAL)
0
MONITOR SECTION
FEEDBACK SIGNAL
$x(t)$
27
INTERFERENCE-CANCELLATION SIGNAL (INTERFERENCE REPLICA SIGNAL)
INTERFERENCE SUPPRESSION APPARATUS (INTERFERENCE CANCELLER)
CONTROL SIGNAL
$S_1(t)$
25
REFERENCE SIGNAL

FIG. 15A

RECEPTION SIGNAL
$x(t)$
24
SYNTHE-SIZING
$z(t)$
23
BRANCH-ING
SATELLITE SIGNAL (RESTORED SIGNAL)
$y(t)$
MONITOR SECTION
FEEDBACK SIGNAL
$z(t)$
27
INTERFERENCE-CANCELLATION SIGNAL (INTERFERENCE REPLICA SIGNAL)
INTERFERENCE SUPPRESSION APPARATUS (INTERFERENCE CANCELLER)
CONTROL SIGNAL
$S_1(t)$
25
REFERENCE SIGNAL

FIG. 15B

22
RECEPTION SIGNAL
23
BRANCH-ING
24
SYNTHE-SIZING
INTERFERENCE-CANCELLATION SIGNAL
25
INTERFERENCE-CANCELLATION SIGNAL
255
DAC
252
253
ADC
INTERFERENCE-REPLICA SIGNAL Kmax
INTERFERENCE-REPLICA SIGNAL 1
INTERFERENCE-REPLICA SIGNAL k
251
INTERFERENCE-ESTIMATION PROCESSING SECTION (CORRELATION DETECTOR)
$h(m_k), m_k$ are determined.
2522
$h(m_{Kmax})$
2522
$S_1(i - m_{K_{max}})$
$h(m_1)$
2522
$h(m_k)$
$S_1(i - m_k)$
$S_1(i - m_1)$
DELAY DEVICE
$h(m_1)$
$m_{Kmax}$
2521
DELAY DEVICE
$m_k$
2521
DELAY DEVICE
2521
254
$m_1$
REFERENCE SIGNAL
ADC

FIG. 16

RECEPTION SIGNAL
REFERENCE SIGNAL
220
22
25
23(1)
BRANCH-ING
24(1)
SYNTHE-SIZING
23(k)
BRANCH-ING
24(k)
SYNTHE-SIZING
23(Kmax)
BRANCH-ING
24(Kmax)
SYNTHE-SIZING
253(1)
ADC
255(1)
DAC
251(1)
252(1)
INTERFERENCE-ESTIMATION PROCESSING SECTION 1 (CORRELATION DETECTOR)
256(1)
CONTROL-LER
2522
DELAY DEVICE
2521
254
ADC
253(k)
ADC
255(k)
DAC
251(k)
252(k)
INTERFERENCE-ESTIMATION PROCESSING SECTION k (CORRELATION DETECTOR)
256(k)
CONTROL-LER
2522
DELAY DEVICE
2521
253(Kmax)
ADC
255(Kmax)
DAC
251(Kmax)
252(Kmax)
INTERFERENCE-ESTIMATION PROCESSING SECTION Kmax (CORRELATION DETECTOR)
256 (Kmax)
CONTROL-LER
2522
DELAY DEVICE
2521

FIG. 17

23(k)
24(k)
BRANCH-ING
SYNTHE-SIZING
25(k)
253(k)
255(k)
ADC
DAC
251(k)
252(k)
INTERFERENCE-ESTIMATION PROCESSING SECTION k (CORRELATION DETECTOR)
256(k)
CONTROL-LER
DELAY DEVICE

FIG. 18A

$|h(m)|$
$l$-TH MULTIPATH
MAXIMUM VALUE
FIRST MULTIPATH
$Lmax$-TH MULTIPATH
$L_{th}$
$m_1$
$m_l$
$m_{Lmax}$
$m$

FIG. 18B

10
11
S0
31(1)
30(1)
40
S1(1)
TRANSMISSION SIGNAL
S1(1)
BRANCHING SECTION
33(1)
S10(1) MULTIPATH-INTERFERENCE SIGNAL
S10(N) MULTIPATH-INTERFERENCE SIGNAL
21
X
20
22
23
BRANCH-ING
X
24
SYNTHE-SIZING
RESTORED SIGNAL
X
Y
25
INTERFERENCE SUPPRESSION APPARATUS
25(1)
25(N)
REFERENCE SIGNAL : S1(1)
WIRED NETWORK
50
31(N)
30(N)
40
S1(N)
TRANSMISSION SIGNAL
S1(N)
BRANCHING SECTION
33(N)
50
WIRED NETWORK
REFERENCE SIGNAL : S1(N)


FIG.19

22
220
23
24
25
257
258
RECEPTION SIGNAL $x_0(t)$
BRANCH-ING
$x_0(t)$
SYNTHE-SIZING
$z(t)$
$y(t)$
DISTRIB-UTING
$x(t)$
25(1)
25(n)
25(N)
(INDIVIDUAL) INTERFERENCE SUPPRESSION APPARATUS
(INDIVIDUAL) INTERFERENCE SUPPRESSION APPARATUS
(INDIVIDUAL) INTERFERENCE SUPPRESSION APPARATUS
REFERENCE SIGNAL FROM THE FIRST BASE STATION $S_{I1}(t)$
REFERENCE SIGNAL FROM THE n-TH BASE STATION $S_{In}(t)$
REFERENCE SIGNAL FROM THE N-TH BASE STATION $S_{IN}(t)$
INTERFERENCE CANCELLATION SIGNAL $y_1(t)$
INTERFERENCE CANCEL-LATION SIGNAL $y_n(t)$
INTERFERENCE CANCELLATION SIGNAL $y_N(t)$


FIG. 20

22
RECEPTION SIGNAL $x_0(t)$
220
23(1)
BRANCH-ING
24(1)
SYNTHE-SIZING
23(n)
BRANCH-ING
24(n)
SYNTHE-SIZING
23(N)
BRANCH-ING
24(N)
SYNTHE-SIZING
$P_N$
$P_n$
$P_1$
256
CONTROL-LER
25(1)
(INDIVIDUAL) INTERFERENCE SUPPRESSION APPARATUS
25(n)
(INDIVIDUAL) INTERFERENCE SUPPRESSION APPARATUS
25(N)
(INDIVIDUAL) INTERFERENCE SUPPRESSION APPARATUS
INTERFERENCE $y_1(t)$ CANCELLATION SIGNAL
INTERFERENCE CANCELLATION SIGNAL $y_n(t)$
INTERFERENCE CANCELLATION SIGNAL $y_N(t)$
SWITCH
259
$S_{I1}(t)$
$S_{In}(t)$
$S_{IN}(t)$
REFERENCE SIGNAL FROM THE FIRST BASE STATION $S_{I1}(t)$
REFERENCE SIGNAL FROM THE n-TH BASE STATION $S_{In}(t)$
REFERENCE SIGNAL FROM THE N-TH BASE STATION $S_{IN}(t)$

FIG. 21

|h(m)|
FIRST MULTIPATH
k-TH MULTIPATH
Kmax-TH MULTIPATH
Lth
m1
mk
mkmax
m
TOTAL POWER OF RECEIVING MULTIPATHS FROM THE FIRST BASE STATION
$P_1 = \sum_{k=1}^{K_{\max}} \left| h\left(m_k\right) \right|$

FIG. 22A

|h(m)|
FIRST MULTIPATH
k-TH MULTIPATH
Kmax-TH MULTIPATH
Lth
m1
mk
mkmax
m
TOTAL POWER OF RECEIVING MULTIPATHS FROM THE n-TH BASE STATION
$P_n = \sum_{k=1}^{K_{\max}} \left| h\left(m_k\right) \right|$

FIG. 22B

|h(m)|
FIRST MULTIPATH
k-TH MULTIPATH
Kmax-TH MULTIPATH
Lth
m1
mk
mkmax
m
TOTAL POWER OF RECEIVING MULTIPATHS FROM THE N-TH BASE STATION
$P_N = \sum_{k=1}^{K_{\max}} \left| h\left(m_k\right) \right|$

FIG. 22C

**INTERNATIONAL SEARCH REPORT**

International application No. **PCT/JP2023/025923**

**A. CLASSIFICATION OF SUBJECT MATTER**

***H04L 27/26***(2006.01)i; ***H04B 7/155***(2006.01)i
FI: H04L27/26 114; H04B7/155

According to International Patent Classification (IPC) or to both national classification and IPC

**B. FIELDS SEARCHED**

Minimum documentation searched (classification system followed by classification symbols)

H04L27/26; H04B7/155

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2021/0152239 A1 (VERIZON PATENT AND LICENSING INC.) 20 May 2021 (2021-05-20)<br>paragraphs [0001], [0059], fig. 1, 5 | 1-21 |
| A | JP 2014-064219 A (SOFTBANK MOBILE CORP) 10 April 2014 (2014-04-10)<br>paragraphs [0030], [0033]-[0034], fig. 3-4 | 1-21 |
| A | JP 2009-159585 A (PANASONIC CORP) 16 July 2009 (2009-07-16)<br>paragraph [0047] | 1-21 |
| A | JP 2012-169738 A (SHARP CORP) 06 September 2012 (2012-09-06)<br>paragraphs [0098]-[0102], fig. 9-10 | 1-21 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 September 2023** | **19 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/025923**

| Patent document cited in search report | Publication date (day/month/year) | Patent family member(s) | Publication date (day/month/year) |
|---|---|---|---|
| US 2021/0152239 A1 | 20 May 2021 | (Family: none) | |
| JP 2014-064219 A | 10 April 2014 | (Family: none) | |
| JP 2009-159585 A | 16 July 2009 | (Family: none) | |
| JP 2012-169738 A | 06 September 2012 | US 2013/0315191 A1<br>paragraphs [0120]-[0124], fig. 9-10<br>WO 2012/108349 A1<br>EP 2675212 A1<br>CN 103348727 A<br>KR 10-2014-0052957 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005237040 A